# EUROPÄISCHE PATENTSCHRIFT

(11) **EP 3 271 221 B1**
(45) Veröffentlichungstag und Bekanntmachung des Hinweises auf die Patenterteilung: **01.11.2023**
(21) Anmeldenummer: 15823175.3
(22) Anmeldetag: 30.12.2015
(51) Int. Cl.: B60T 7/04, B60T 8/40, B60T 13/68, B60T 13/74

(54) **BREMSANLAGE MIT NEUARTIGER MUX-REGELUNG (MUX 2.0) MIT EINEM AUSLASSVENTIL PRO BREMSANLAGE ODER EINEM AUSLASSVENTIL PRO BREMSKREIS UND VERFAHREN ZUR DRUCKREGELUNG**
BRAKE SYSTEM WITH A NEW TYPE OF MUX CONTROL (MUX 2.0), HAVING AN OUTLET VALVE/BRAKE SYSTEM OR AN OUTLET VALVE PER BRAKE CIRCUIT, AND METHOD FOR CONTROLLING PRESSURE
SYSTÈME DE FREINAGE À RÉGULATION MUX INNOVANTE (MUX 2.0) ÉQUIPÉ D'UNE SOUPAPE DE SORTIE/OU ÉQUIPÉ D'UNE SOUPAPE DE SORTIE PAR CIRCUIT DE FREINAGE ET PROCÉDÉ SERVANT À LA RÉGULATION DE PRESSION

(30) Priorität: 16.03.2015 DE 202015107072 U; 16.03.2015 DE 202015107075 U; 16.03.2015 DE 202015107079 U
(43) Veröffentlichungstag der Anmeldung: 24.01.2018
(73) Patentinhaber: IPGate AG, 8808 Pfäffikon (CH)
(72) Erfinder: LEIBER, Heinz, 71739 Oberriexingen (DE); LEIBER, Thomas, 81675 München (DE)
(74) Vertreter: Meissner Bolte Partnerschaft mbB
(86) Internationale Anmeldenummer: PCT/EP2015/081402
(87) Internationale Veröffentlichungsnummer: WO 2016/146223

(56) Entgegenhaltungen:
- DE-A1- 19 601 268
- DE-A1- 19 601 417
- DE-A1-102011 118 365
- DE-A1-102012 002 791
- DE-A1-102013 224 313

## Beschreibung

Die Erfindung betrifft eine Bremsanlage für ein Kraftfahrzeug nach dem Oberbegriff des Patentanspruches 1.

### Stand der Technik

Aus WO2006/111392A1 und WO2010/091883 A1 sind Bremsanlagen bekannt, bei denen im ABS-Betrieb der Druck in den Radbremsen zeitgleich oder in einem geschlossenen Multiplexverfahren nacheinander eingestellt wird. Dies erfolgt über ein Schaltventil sowie über die positionsgeregelte Steuerung eines angetriebenen Kolbens zum Druckauf- und Druckabbau unter Berücksichtigung der Druckvolumenkennlinie jeder einzelnen Radbremse. Vorzugsweise werden Schaltventile mit geringem Strömungswiderstand in Verbindung zur Radbremse eingesetzt. Der Druck kann dabei sequentiell oder simultan in einem oder mehreren Radbremsen verändert werden. Zur Steuerung wird ein Drucksensor verwendet, der den Druck in der hydraulischen Verbindung zwischen Kolben-Zylinder-Einheit und Radbremsen misst.

Vorteil dieses Verfahrens ist die sehr präzise Druckregelung, insbesondere bei niedrigen Reibwerten und bei Rekuperation. Zudem kann der Aufwand an Ventilen deutlich reduziert werden, da anstatt je einem Einlass- und je einem Auslassventil pro Radbremse nur ein Schaltventil benötigt wird. Nachteilig bei den aus diesen beiden Dokumenten bekannten Bremsanlagen sind die hohen Anforderungen an den Elektromotor. So muss dieser u.a. eine geringe Trägheitsmasse sowie ein hohes Drehmoment für Reversierbetrieb aufweisen.

Aus DE 10 2012 002 791 A1 ist eine Radbremse vorbekannt, dessen Grundaufbau mit Hauptbremszylinder und Trennventilen im Markt als MKC1, siehe auch DE 10 2013 224313 A1, bekannt ist. Der Multiplexbetrieb ist dabei derart gestaltet, dass sowohl Hauptbremszylinder als auch Druckversorgereinheit jeweils über Trennventile mit den Bremskreisen verbunden sind.

Vorteil dieser Anordnung ist der modulare Aufbau und der Einsatz von Standardkomponenten (Hauptbremszylinder), sowie der Einsatz einer separaten Druckversorgereinheit. In dieser Anordnung kommt es zu keinen Differenzdrücken in den Bremskreisen, da die Druckversorgereinheit über Trennventile mit den Bremskreisen verbunden ist und es über die Zwischenschaltung eines Kolbens zur Medientrennung zu keinen Differenzdrücken kommt.

Nachteilig ist jedoch der hohe Aufwand an Komponenten. So wird u.a. eine große Anzahl von Ventilen, ein aufwändiger Hauptbremszylinder mit zwei Kammern und ein Simulator benötigt.

In der DE 102014117727 wird das in DE 10 2012 002 791 A1 beschriebene Bremssystem um eine neuartige Druckversorgereinheit ergänzt, die einen Doppelhubkolben aufweist, welcher im Vor- und Rückhub betrieben wird und im Vorhub einen andere hydraulische Querschnittsfläche als im Rückhub aufweist und mit dem ein kontrollierter Druckabbau möglich ist.

Vorteil dieser Ausführung ist die kontinuierliche Förderung durch die Druckerzeugereinheit, sowie das Motordownsizingpotential in klassischen Bremsanlagen mit Einlass- und Auslassventilen durch Nutzung einer kleineren hydraulischen Fläche. Aufgrund der hohen Dynamikanforderungen für das Motordrehmoment für den Einsatz im Regelbetrieb kann der Vorteil des Downsizings jedoch nicht genutzt werden und somit die Bremsanlage nicht vorteilhaft minimiert werden.

Ferner sind aus dem Stand der Technik verschiedene Hauptbremszylinderausführungen mit Wegsimulator bekannt, die mit zwei Kolben oder drei Kolben sowie einem Wegsimulator aufgebaut sind.

Vorteilhafte Ausführungen der Hauptbremszylinder sehen entsprechende Ventilschaltungen für den Wegsimulator (Abschaltung in Rückfallebene, Funktionsventile, Einspeisung bei Rückfallebene) sowie Trennventile zu den Bremskreisen zur Entkoppelung des Pedals im Brake-by-Wire-Betrieb vor. Hier wird nur beispielhaft auf DE 10 2010 081463 A1 und DE 10 2013 216477 A1 verwiesen.

DE 10 2011 118 365 A1 offenbart ein Verfahren zur Diagnose der Dichtheit bzw. Funktionsfähigkeit einer Bremsvorrichtung.

Das in dieser Erfindung beschriebene Druckregelmodul funktioniert mit allen o.g. Brake-by-Wire Hauptbremszylinderausführungen mit Wegsimulator und wird im Folgenden daher nicht näher ausgeführt. Unterschiede in der Hauptbremszylinderausführung sind im Wesentlichen dadurch begründet, dass unterschiedliche Kundenwünsche hinsichtlich Pedalrückwirkung vorherrschen und Automobilzulieferer Standardkomponenten im Hauptbremszylinder einsetzen möchten und bestimmte Ausführung ein oder mehrere Trennventile zur Druckversorgereinheit benötigen.

Aus DE10 2013 216477 A1 ist ein Dreikolben-THZ mit Ventilschaltung für die Druckversorgungseinheit und Druckregelung für ABS bekannt. Im Normalbetrieb ist der zweite Druckraum drucklos, und der dritte dem SK-Kolben zugeordnet. Dieser verharrt in seiner Ausgangsstellung. Die Druckregelung erfolgt im HA-Kreis mit MUX und im Vorderachskreis bedarfsweise mit MUX oder zwei zusätzlichen Auslassventilen, die bei P_{ab}-Funktion das Druckmittel über ein zusätzliches Ventil zum Vorratsbehälter leitet. Die Druckregelung im Multiplexbetrieb erfolgt nicht über die aus WO2006/111392A1 bekannte Volumenmessung, sondern über PWM der sog. Radventile unter ständiger Druckmessung mittels Druckgeber.

### Aufgabe der Erfindung

Aufgabe der vorliegenden Erfindung ist es, eine kostengünstige Bremsanlage mit hoher Regelgüte und Regelungsperformance bereitzustellen.

### Lösung der Aufgabe

Die Aufgabe der Erfindung wird mit einer Bremsanlage mit den Merkmalen des Patentanspruches 1 gelöst. Vorteilhafte Ausführungen bzw. Ausgestaltungen der Erfindung ergeben sich durch Merkmale der Unteransprüche.

Die erfindungsgemäße Bremsanlage zeichnet sich durch eine signifikante Verbesserung gegenüber vorbekannten Bremsanlagen mit Multiplexregelung, welche mit 4 Schaltventilen oder 8-Ventiltechnik mit Einlass- und Auslassventilen für ABS, ausgebildet sind. Die erfindungsgemäße Bremsanlage ist vorteilhaft in Kombination mit unterschiedlichen Hauptbremszylinderkonzepten eines Brake-by-Wire-Bremssystems universell einsetzbar.

Die erfindungsgemäße Bremsanlage zeichnet sich durch einen hochdynamischen MUX-Betrieb aus und ermöglicht eine große Performancesteigerung und eine große Kostenreduzierung durch die minimale Anzahl an Ventilen, wobei vorteilhaft einfache Schaltventile auf Basis modifizierter Einlassventile zum Einsatz kommen können. Auch werden nur wenige Druckgeber/Sensoren benötigt. Von besonderem Vorteil ist es, dass lediglich ein kleiner kostengünstiger Motor als Antrieb für die Druckversorgereinheit benötigt wird.

Durch die Erfindung wird vorteilhaft ein Druckregelmodul mit Druckregelung bereitgestellt, das sich durch hohe Druckregelgüte, hohe Dynamik durch kurze Zykluszeit, spezielle einfache Gestaltung der strömungsarmen Schaltventile mit vorteilhafter Anströmung, sowie eine Reduzierung der Anforderungen an den Motor der Druckversorgereinheit und minimale Strömungswiderstände auszeichnet.

Dies wird mit einer kompakt bauenden Bremsanlage geschaffen, die die Vorteile eines Multiplexers in Form von einer hohen Regelgüte in der Druckregelung durch Druckvolumensteuerung in verschiedenen Betriebsmodi wie z.B. Rekuperation, ABS, ESP, ASR um neuartige Druckabbau- und Druckauf Regelungskonzepte erweitert, die mit wenigen Auslassventilen zur Reduzierung der Zykluszeit im temporär offenen Bremskreis auskommt.

Die gestellten Anforderungen werden erfindungsgemäß dadurch erfüllt, dass durch Betrieb im geschlossen und teilweise offenen Bremskreis mit minimaler Ventilanzahl und vorzugsweise einer vorteilhaften Gestaltung der Druckerzeugereinheit mit einen intelligenten Aufbau der Druckerzeugereinheit mit Drucckolben welcher nur einen Arbeitsraum begrenzt oder einem Doppelhubkolben, welcher zwei Arbeitsräume begrenzt.

Folgende Grundideen liegen der erfindungsgemäßen Bremsanlage zugrunde:
- Druckregelung im geschlossenen und teilweise offenen Bremskreis mit minimalen Volumenverlust im ABS-Regelbetrieb;
- Druckaufbau und Druckabbau mit vielen Freiheitsgraden, hoher Regelgüte und Dynamik mit Schaltventilen und lediglich einem Auslassventil in nur einem oder beiden Bremskreisen;
- teilweise gleichzeitiger Druckaufbau und Druckabbau im geschlossen Bremskreis unter Verwendung eines Doppelhubkolben in der Druckversorgungseinheit;
- Nutzung der Strommessung des Elektromotors der Druckversorgungseinheit für indirekte Druckmessung und Nutzung insbesondere in der Druckabbau- und Druckaufbauregelung in zwei Bremskreisen;
- Genauer druckgesteuerter Druckabbau mittels Druckmessung über Druckgeber über Druckversorgereinheit und Ventile, die Druckversorgereinheit mit Vorratsbehälter verbinden (Doppelhubkolben mit PD1, PD3-Ventil).
- Neuartige Gestaltung der Druckversorgereinheit in der Ausführung als Doppelhubkolben mit Vorfülleffekt, Nutzung unterschiedlicher hydraulischer Flächen insbesondere beim Druckaufbau bei hohen Drücken;
- Minimierung des Betriebs im offenen Bremskreis durch vorzugsweise Regelung im Multiplexbetrieb im geschlossenen Bremskreis;

Bei der erfindungsgemäßen Bremsanlage müssen selbstverständlich nicht alle der vorgenannten Ideen verwirklicht sein, wesentlich ist jedoch, dass lediglich maximal ein Auslassventil pro Bremskreis und je ein Schaltventil pro Radbremse zum Druckauf- und zum Druckabbau vorgesehen sind, wodurch vorteilhaft die Anzahl der notwendigen Ventile kleiner als acht ist, welche bei einem herkömmlichen ABS-System notwendig sind.

Die erfindungsgemäße Bremsanlage weist zudem ein neues intelligentes Multiplexverfahren auf, welches einen weitestgehend zeitgleichen Druckabbau in mehreren Radbremsen über Zeitsteuerung des Auslassventils bzw. der Auslassventile vorsieht und auch optional simultanen Druckabbau und Druckaufbau in unterschiedlichen Bremskreisen ermöglicht.

Der Erfindung liegt der Grundsatz zugrunde, dass im Normalbetrieb mit geringen Dynamikanforderungen und hoher Druckstellpräzisionsanforderung, insbesondere bei der normalen Bremskraftverstärkung, Rekuperation, ABS auf Low-µ in allen Radbremsen bzw. Radbremszylindern der Druck über Wegsteuerung des Kolbens der Druckversorgereinheit unter Berücksichtigung der Druck-Volumen-Kennlinie(n) simultan oder sequentiell auf- und abgebaut wird. Dabei kommt keine PWM-Steuerung der Schaltventile oder eine vereinfachte Ventilschaltung zum Einsatz. Stattdessen sind die den Radbremsen zugeordneten Schaltventile bei der Druckeinstellung stets die ganze Zeit über geöffnet und werden nach Erreichen des gewünschten bzw. vorgegebenen Solldrucks geschlossen, um den Bremsdruck in den Radbremsen zu halten. In Betriebssituationen mit hohen Dynamikanforderungen, wie z.B. ABS bei High-µ , µ-Split, ESP und ASR, wird der Druck grundsätzlich in allen Radbremszylindern immer mit Druckvolumensteuerung im Multiplexbetrieb, d.h. simultan oder sequentiell aufgebaut. Auch hier kommt keine PWM-Steuerung der Schaltventile zum Einsatz, sondern erfolgt der Druckabbau bei einem Teil der Radbremsen im Multiplexbetrieb Druck simultan oder sequentiell während in der einen bzw. den beiden Radbremsen über das jeweils zugeordnete Auslassventil der Druck in das Vorratsbehältnis erfolgt, wobei das jeweilige Auslassventil nur für eine zuvor bestimmte Zeit geöffnet wird, damit sich in dieser Zeit der Druck in der Radbremse bis zum Soll-Druck abbauen kann. Ebenso kann der Druckabbau über einen Arbeitsraum der Druckversorgereinheit und von dort über ein Schaltventil hin zum Vorratsbehältnis erfolgen. Das Schaltventil wird ebenfalls zeitgesteuert, so dass sich in der vorbestimmten Zeit, in der das Ventil geöffnet ist, der Druck hin zum Soll-Druck abbauen kann. Der Druckabbau in anderen Radbremsen kann zeitgleich über die Volumensteuerung mittels des Kolbens der Druckversorgereinheit erfolgen.

Die Druckabbauregelung im Multiplexbetrieb im geschlossenen Bremskreis wird gegenüber dem Stand der Technik dahingehend erweitert, dass beim simultanen Druckabbau in zwei Radbremsen die Schaltventile SV simultan oder zeitlich versetzt geöffnet werden, wobei das Schaltventil desjenigen Rades, das einen höheren Druck hat, vorzeitig geöffnet wird.

Der Druckabbau im offenen Bremskreis erfolgt vorzugsweise über Zeitsteuerung der Auslassventile zum Vorratsbehältnis. Durch Druckabbau über Auslassventile ist der Bremskreis kurzzeitig geöffnet.

Durch die o.g. Erweiterungen kann der Multiplexer bzw. die Druckversorgereinheit stark entlastet werden und zugleich die Regelgüte durch kürzere Zykluszeiten erhöht werden.

Somit kann der Druck in einem Bremskreis schnell abgebaut werden, indem durch Öffnen des Auslassventils der einen Radbremse der Druck abgebaut wird und gleichzeitig der Druck in der anderen Radbremse des Bremskreises mittels der Druckversorgereinheit abgebaut wird. Bei einem herkömmlichen Multiplexer ohne entsprechendes Auslassventil hätte der Druckabbau in den beiden Radbremsen eines Bremskreises zeitlich nacheinander erfolgen müssen, und würde somit mindestens doppelt so lange dauern.

Auch kann das Auslassventil vorteilhaft für den Druckabbau in beiden Radbremsen des Bremskreises genutzt werden, wenn sowohl das Auslassventil als auch die beiden den Radbremsen zugeordneten Schaltventile im Multiplexbetrieb geöffnet werden.

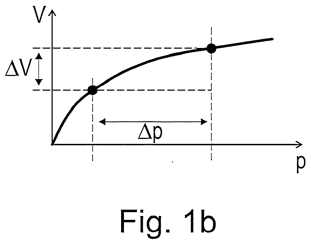

Vorzugsweise wird nur ein Auslassventil in einem Bremskreis eingesetzt, insbesondere zur Vereinfachung der Regelung im Bremskreis II. So wird ein Auslassventil (AV3, Fig. 1b) zum Druckabbau in einem oder 2 Radbremszylindern genutzt. Für einen Abbau in zwei Radbremsen über ein Auslassventil ist der Radbremszylinder von der Druckversorgereinheit abgetrennt. Gleichzeitig kann der Druck im Bremskreis BK I und BK II über Druckvolumensteuerung der Radbremsen simultan oder sequentiell aufgebaut oder abgebaut werden. Dieser Freiheitsgrad führt zu einer signifikanten Reduzierung der Zykluszeit der Druckstellung von vier Radbremsen und wirkt sich insbesondere bei Extremsituationen, wie z.B. wechselndes µ, insbesondere im high µ Bereich, sehr vorteilhaft auf die Regelgüte (Abweichung der Radgeschwindigkeiten von der Fahrzeuggeschwindigkeit) aus und führt zu kürzeren Bremswegen. Zudem wird der Volumenverlust im Bremskreis minimiert, weil im Regelbetrieb nur sehr wenig Volumen verloren geht. Dies hat vorteilhafte Auswirkungen auf eine kleine Dimensionierung des Volumens der Druckversorgereinheit.

Die vorgestellten Voll-MUX-Systeme aus dem Stand der Technik haben bekanntlich das Problem des gleichzeitigen Druckabbaus P_{ab}, wenn das Druckniveau in den Radbremsen sehr unterschiedlich ist. Viele setzen die Volumensteuerung zur Drucksteuerung unter Auswertung der Druck-Volumen-Kennlinie der Räder / Radzylinder ein. Der Zeitverlust beim Druckabbau p_{ab} der Räder / Radbremsen, insbesondere der Vorderachse soll jedoch möglichst klein sein. Durch die Umschaltzeiten der bekannten MUX-Systeme erfolgt jedoch eine deutliche Zeitverschiebung durch die benötigte Umschaltzeit im Multiplexbetrieb. Infolge des hohen Bremskraftanteils der Vorderachse (V) ist diese besonders anspruchsvoll für eine gute Regelung, was bedeutet, dass die Räder immer hochdynamisch und nahezu mit optimalem Bremsdruck nahe dem Schlupfoptimum betrieben werden sollen. Die erfindungsgemäße Bremsanlage wird diesen Ansprüchen besonders gerecht, sofern die vorbeschriebene hochdynamische Regelstrategie mit Volumen und Zeitsteuerung verwendet wird. Weiterhin galt als (kleiner) Nachteil bei den vorbeschriebenen vorbekannten Bremsanlagen, dass kein Druckaufbau p_{auf} erfolgen kann, wenn ein Rad einen Druckabbau p_{ab} verlangte. Als Alternative zu Voll-MUX werden Teil-MUX-Systeme vorgeschlagen, in denen ein BK mit MUX und der zweite BK mit konventionellen EV- und AV-Ventilen konzipiert ist.

Ein wesentlicher Nachteil der Auslassventile (AV-Ventile) ist die schlechtere Genauigkeit der Drucksteuerung, Druckschwingungen und die Geräuschbildung. Bei der oben beschriebenen Regelstrategie wird vorwiegend der leise und volumengesteuerte Multiplexbetrieb eingesetzt. Die Auslassventile werden nicht kontinuierlich benötigt und werden relativ selten eingesetzt.

Dies wird erreicht durch eine Prioritätssteuerung des Multiplexers mit erster Priorität für die Vorderachse und zusätzlicher Verwendung des Auslassventils AV mit ungedrosseltem Rücklauf in den Vorratsbehälter. Für die Hinterachse erfolgt der Druckabbau p_{ab} mit dem Multiplexer mit zweiter Priorität. Alternativ hierzu kann ein Druckabbau p_{ab} an der Hinterachse mit genauer Zeitsteuerung der Schaltventile erfolgen, wodurch nur ein geringer Zeitverzug entsteht. Während der ganzen Regelung wird zu Beginn des Druckabbaus der Druck aller Räder gespeichert, so dass die MUX-Steuerung der Druckversorgereinheit (DE) sofort auf den optimalen Steuerdruck umschalten kann. Eine genaue Zeitsteuerung der Auslassventile gegenüber dem Stand der Technik ist dadurch möglich, weil die Druckdifferenz bekannt ist und aus der Druck-Volumen-Kennlinie auch das Volumen und damit die Durchflussmenge für die Zeitsteuerung des Auslassventils oder eines Schaltventils bestimmt werden kann. Druckschwingungen gegen Ende der Druckänderung können ergänzend durch Druckabbauunterstützung durch eine entsprechende Kolbensteuerung der Druckversorgereinheit reduziert werden.

Die zeitlichen Abläufe der Verfahren werden in den Figuren später eingehend gezeigt und erläutert.

Unter der Volumensteuerung wird erfindungsgemäß verstanden, dass die Steuerungseinrichtung die aktuellen Druckniveaus, die Druck-Volumen-Kennlinien sowie die Ziel-Solldrücke für die jeweiligen Radbremse(n) auswertet und anhand dieser Daten das notwendige Fördervolumen berechnet, welches mittels der Druckversorgereinheit bereitgestellt werden muss. Anhand dieses Fördervolumens wird dann der notwendige Verstellweg des Kolbens der Druckversorgereinheit bestimmt. Bei entsprechender Ventilschaltung und Ausführung der Druckversorgereinheit ist es möglich, einen Druckaufbau P_{auf} in einem Bremskreis und gleichzeitig einen Druckabbau p_{ab} in einem anderen Bremskreis zu realisieren.

Bisher waren die für den Multiplexbetrieb benötigten Ventile durch die Anforderungen an Differenzdruck und Durchflussquerschnitt durch große Dimensionierung des Magnetkreises teurer. Durch entsprechende Anströmung des Magnetventils vom Bremskreis in den Ankerraum und anschließend über den Ventilsitz zum Radzylinder kann bei der erfindungsgemäßen Bremsanlage vorteilhaft ein kostengünstiges Standard-Magnetventil eingesetzt werden.

Zur Unterstützung der Regelung wird ein Drucksensor für die Druckbestimmung in einem Bremskreis verwendet. Der Druck im anderen Bremskreis kann bei Trennung durch ein Trennventil über das bekannte Verfahren über Phasenstrommessung des Elektromotors indirekt ermittelt werden. Die Genauigkeit der Druckschätzung wird zusätzlich erhöht, wenn ein Temperatursensor im den Kolben antreibenden Elektromotor angeordnet wird, da sich die Drehmomentkonstante proportional zur Temperatur verändert. Bei bekannter Querschnittfläche des Hauptbremszylinders, Getriebeübersetzung kann über den proportionalen Zusammenhang zwischen Phasenstrom und Drehmoment des Elektromotors der Druck berechnet werden.

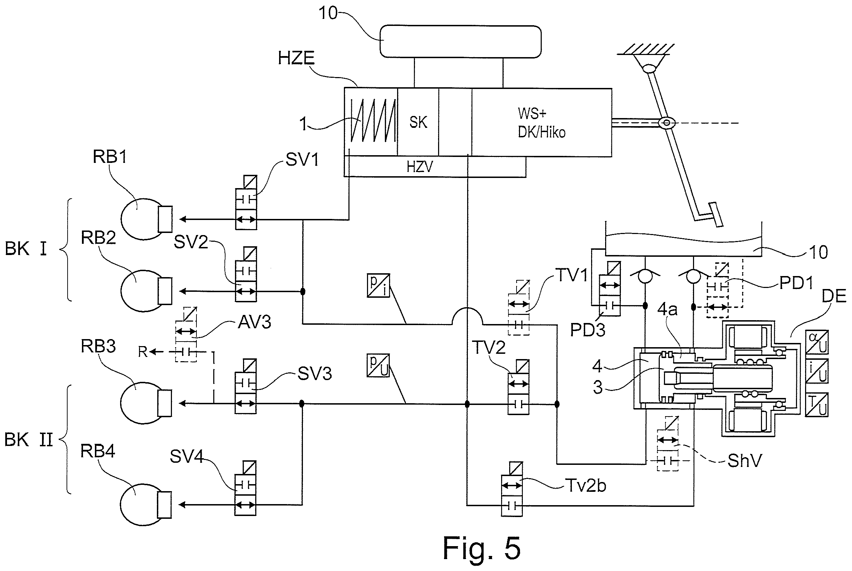

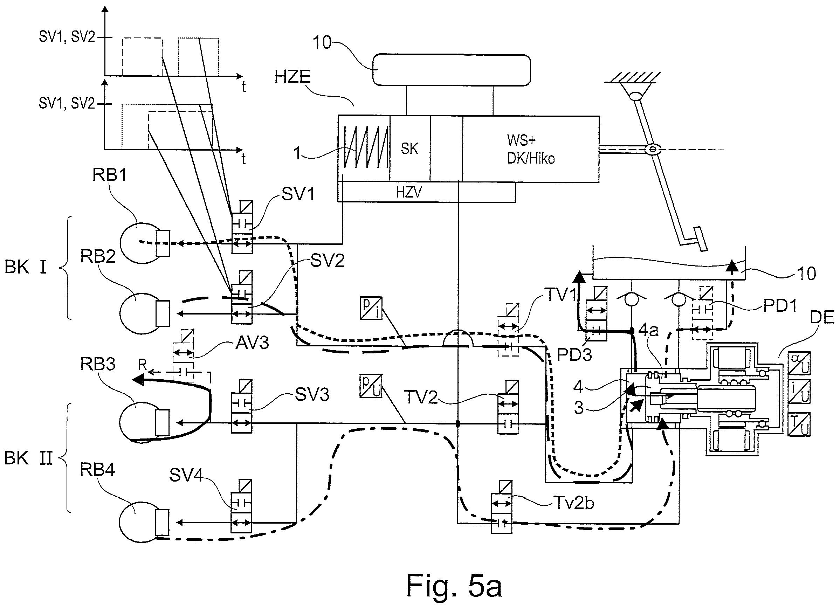

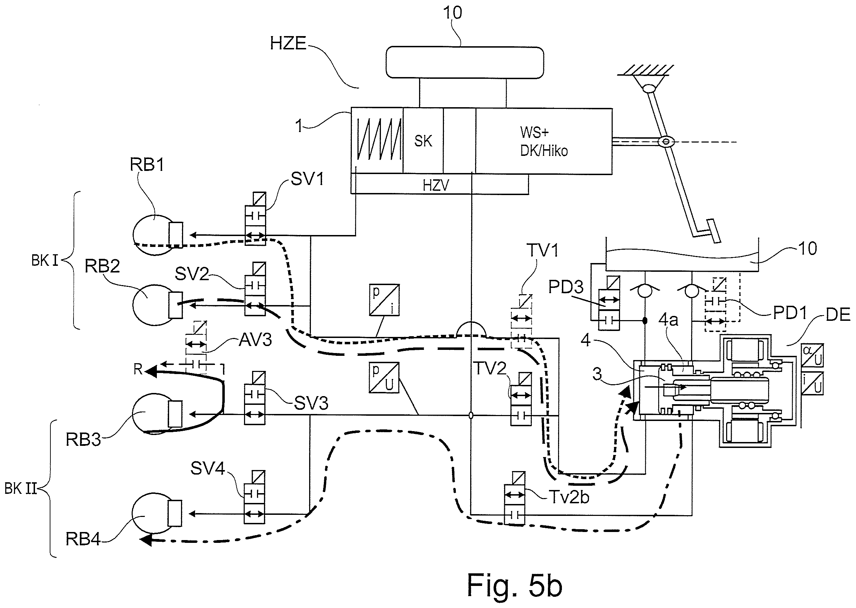

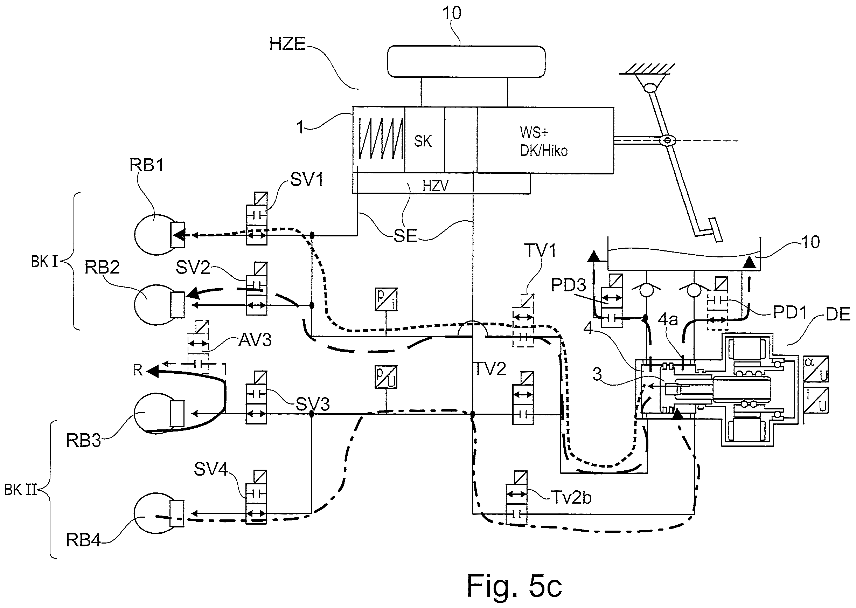

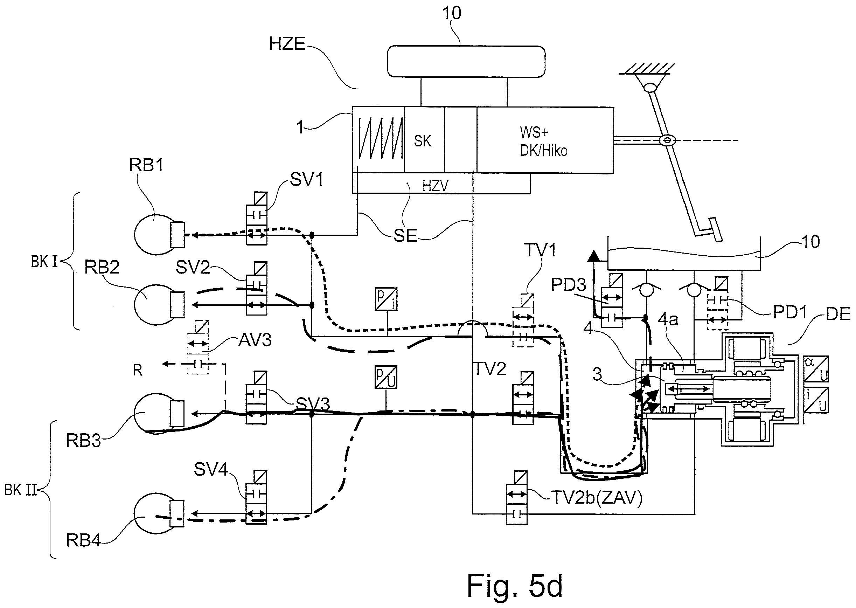

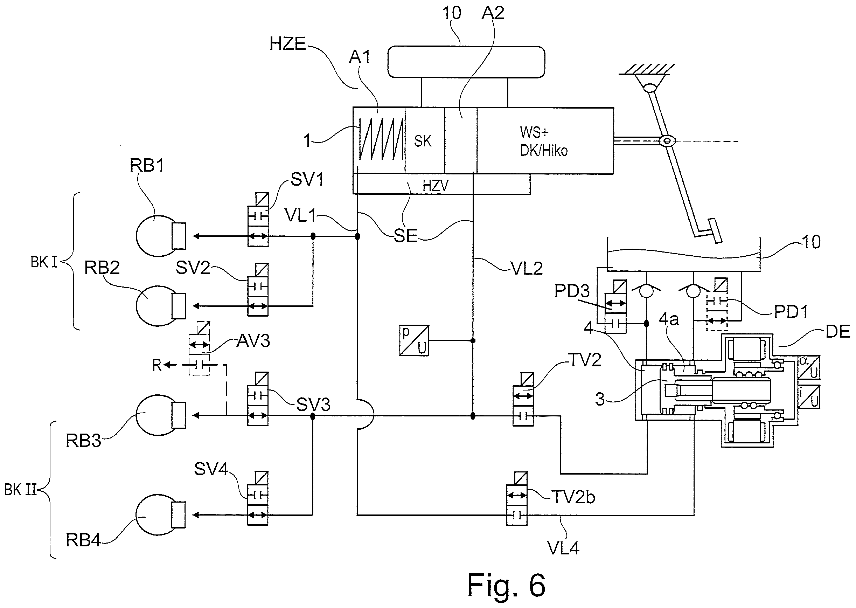

Vorteilhaft für die erfindungsgemäße Bremsanlage ist der Einsatz eines Doppelhubkolbens, mit dem Druck im Multiplexbetrieb auf- und abgebaut werden kann. Auch ist es von Vorteil, wenn ein weiteres Ventil (TV2b, bzw. ZAV) für den Druckabbau in die zweite Kammer (4a, Fig. 5) des Doppelhubkolbens zur Verfügung steht. Insbesondere beim Doppelhubkolben ist der Einsatz eines oder mehrere Druckabbauventile PD3, PD1 Figuren 5a-5d, Figur 6) sinnvoll, damit der Druck im Bremssystem weitestgehend im geschlossen Betrieb abgebaut werden und der Druckabbau auch bei hohen Drücken geräuscharm erfolgen kann. Dies ist insbesondere im Bremskraftverstärkerbetrieb mit Fading und Druckabbau im Stillstand nach ABS-Eingriff wünschenswert.

Der Druckabbau erfolgt dann entweder über den Kolbenrückhub, den druckgeregelten Druckabbau mittels Druckmessung über den Druckgeber über die Druckversorgereinheit und/oder über Ventile, die die Druckversorgereinheit (Doppelhubkolben) mit dem Vorratsbehälter verbinden (d.h. PD3, PD1). Zur Regelung des Druckabbaus in beiden Bremskreisen wird der Druckgeber im Bremskreis BK II verwendet. Soll der Druck individuell in Bremskreis I und II abgebaut werden, wird zusätzlich die Druckschätzung auf Basis der Phasenstrommessung verwendet. Der Druckabbau kann dabei über eine Kammer 4 des Kolbens oder beide Kammern 4 und 4a erfolgen.

Der Druckabbau über Kolbenrückhub erfolgt dabei im normalen Bremskraftverstärkerbetrieb bis zu Drücken nahe des Blockierdrucks, der Druckabbau über PD3, PD1 bei Druckabbau aus hohen Drücken, insbesondere nach Fading bzw. Ende von ABS-Regelvorgängen.

Der Doppelhubkolben in der Druckversorgereinheit kann derart ausgestaltet sein, dass die hydraulischen Flächen im Vor- und Rückhub unterschiedlich sind. Durch Änderung der hydraulisch wirksamen Flächen wird der Drehmomentbedarf bei hohen Drücken reduziert. Gleichzeitig kann ein Vorfülleffekt erreicht werden, d.h. durch einen größeren Volumenstrom bei geringen Drücken kann ein sehr schnelles Anbremsen erreicht werden bzw. ein Belaglüftspiel überwunden werden.

Die geringe hydraulische wirksame Fläche wird dadurch wirksam, in dem der Doppelhubkolben im Rückhub betrieben wird bzw. ergänzend im Vorhub über ein Umschaltventil (ShV) oder zwei Ventile (TV2 und TV2b) die vordere und hintere Kammer des Doppelhubkolben verbunden werden und somit ein geringere hydraulische Fläche im Druckaufbau wirkt. Wird der Doppelhubkolben zurückgezogen, kann über Öffnen eines Druckabbauventils PD1 der Druck in beiden Bremskreisen in das Vorratsbehältnis abgebaut werden. Damit ist ein geräuscharmer Betrieb im geschlossen Bremskreis möglich. Durch intelligente Ansteuerung kann das Öffnen des Trennventils auch bei hohen Differenzdrücken (Bremskreisdruck zu Druck im Doppelhubkolben) dadurch unterstützt werden, indem der Doppelhubkolben vor dem Öffnen des Ventils den Druck im Arbeitsraum verändert und ein Öffnen bei geringen Differenzdrücken ermöglicht. Dies ermöglicht ein Downsizing des Trennventils, insbesondere dessen Auslegung auf hohe Durchflüsse und geringe Differenzdrücke.

Der Druckabbau erfolgt dann entweder über Kolbenrückhub (PD1 offen) über Druckvolumensteuerung und bedarfsweise Öffnen von Auslassventilen im Bremskreis II sowie Druckabbau über TV2b (ZAV). Zur Geräuschreduzierung kann für diesen Betriebspunkt ein Auslassventil zeitgesteuert gesteuert geöffnet und der Druckabbau über den Kolben beeinflusst werden, so dass Druckschwingungen vermieden werden und ein sanftes Einschwingen auf ein Zieldruckniveau erreicht wird. Dies kann insbesondere beim Druckabbau über ZAV wirksam eingesetzt werden.

Im Rückhub kann bei geschlossenem Ventil PD1 nur Druck aufgebaut werden bzw. das Volumen von einem Bremskreis in den anderen geschoben werden. Dieser Druckaufbau wird vorzugsweise nur dann genutzt, wenn der Druck über das normale Betriebsniveau signifikant angehoben werden muss, wie z.B. bei Fading >120 bar.

Zudem kann in einem Bremskreis in einer oder zwei Radbremszylindern Druck abgebaut und in dem anderen Bremskreis zeitglich Druck mit der Druckvolumensteuerungsmethode aufgebaut werden, wie dies in Fig. 5b dargestellt ist. Die Regelung des Druckes folgt dabei über die entsprechende angepasste Druckvolumenkennlinie, die Volumen der bestätigen Radbremsen sowie hydraulisch wirksame Fläche berücksichtigt. Wird der Zieldruck erreicht, wird das jeweils zugehörige Ventil geschlossen und das Volumen der noch aktiven Radbremsen wird über PD1 abgebaut. Gleichzeitig ist über ein Auslassventil ein Druckabbau möglich.

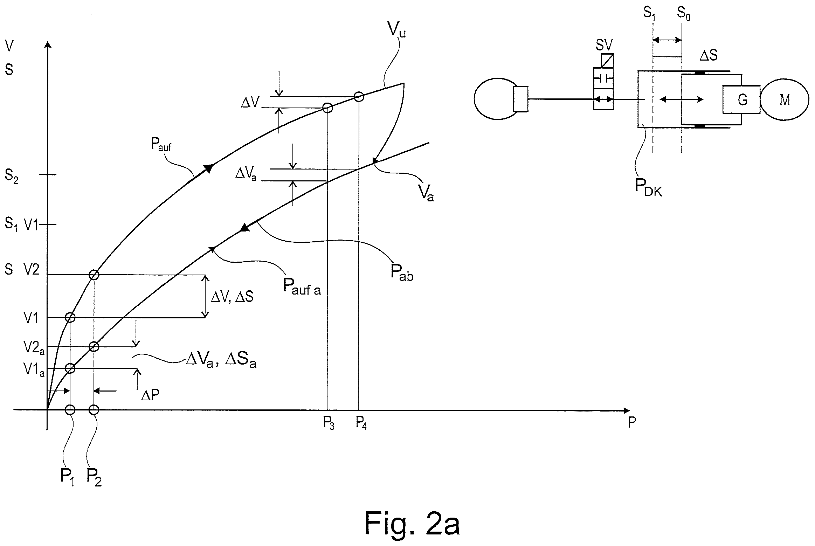

Im System wird vorzugsweise die MUX- Regelung, d.h. der Drucksteuerung über Druckvolumenkennlinie bei geschlossenen Bremskreis eingesetzt (Figur 2a-2b). Somit wird im geschlossenen Bremskreis der Druck auf Basis der Druckvolumenkennlinie auf- und abgebaut. Dies erfolgt vornehmlich bei der Bremskraftverstärkung, Rekuperation, ABS-Betrieb bei niedrigen Frequenzen und Druckamplituden. In anderen Betriebsfällen, wie z.B. kontrollierter Druckabbau nach ABS-Betrieb, gleichzeitiger Druckaufbau und Druckabbau bei hohen Frequenzen, kann der Druck ergänzend zur Zeitsteuerung der Auslassventile bedarfsweise unterstützt durch Plungerwegsteuerung im Druckabbau beeinflusst werden (Fig. 6b).

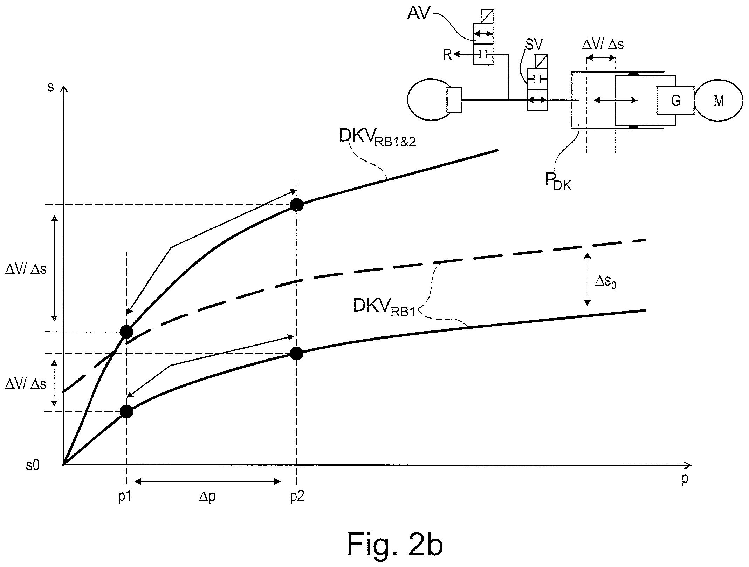

Nach dem Druckabbau bei Öffnung des Bremskreises kommt es stets zu einem Volumenverlust im Bremskreis und damit zu einer Wegänderung in der Kolbenposition der Druckerzeugereinheit. Daher ist es sinnvoll, die Offsetverschiebung Δsₒ der Druckvolumenkennlinie zu erfassen (Figur 2b). Dies ist für die MUX-Regelung nicht erforderlich, jedoch für die Regelung und Optimierung des Volumenhaushaltes, um zu verhindern, dass der Kolben bei einem Regelungsvorgang an einen Anschlag fährt. Insbesondere bei Einsatz eines Doppelhubkolbens mit begrenztem Volumen in eine Hubrichtung, ist die Information der Absolutposition des Kolbens für die Regelung wichtig.

Diese vorgeschlagene Steuerung mit Auslassventil(en) und Druckabbau p_{ab}-Zeitsteuerung entlastet die Dynamik des Motors erheblich. Der seltene Einsatz des Auslassventils erhält die Vorteile, dass die ABS-Druckmodulation keine Öffnung des Bremskreises erforderlich macht, was die Wahrscheinlichkeit eines Bremskreisausfalls gering macht und besondere Vorteile für autonomes Fahren / Bremsen bringt.

Das Druckregelmodul mit Druckregelung und seinen verschiedenen Ausführungsformen bietet somit einen Baukasten für eine perfekte Druckregelung ohne Einschränkung und hoher Fehlersicherheit. Die Nachteile des klassischen Multiplexers, wie z.B. lange Zykluszeit durch sequentielle Radbedienung, keine Möglichkeit des gleichzeitigen Druckaufbau und Druckabbau, hohe Anforderung an Dynamik des Elektromotors, sind damit beseitigt und bieten die Grundlage für eine annähernd perfekte Regelung mit minimalen Ventilaufwand. Je nach Auswahl der Druckversorgereinheit (Einfachhubkolben oder Doppelhubkolben) sind unterschiedliche Freiheitsgrade möglich. Der Einfachhubkolben hat den Vorteil der geringen Software-Komplexität, der Doppelhubkolben bietet alle Freiheitsgrade und das Motordownsizingpotenzial. Zudem sind unabhängig von der Wahl der Druckversorgereinheit die Anforderungen an den Motordrehmomentbedarf für den Reversierbetrieb der Multiplexregelung drastisch reduziert und der Elektromotor kann signifikant in Baugröße und Kosten reduziert werden.

Eine weitere Verbesserung im System-Layout ergibt sich vorteilhaft durch Einspeisung des Volumens der Druckversorgereinheit über ein Schnüffelloch in die Vorderseite eines Schwimmkolbens. Hierdurch erhöht sich zudem vorteilhaft die Sicherheit bei gleichzeitig verringerten Kosten. Bei diesem System-layout kann auf das Trennventil TV1 verzichtet werden, da die Druckversorgereinheit im Systemausfall über Bewegung des Kolbens getrennt ist. Dies bietet Kostenvorteile (weniger Ventile) und reduziert den Strömungswiderstand zwischen Druckversorgereinheit und dem ersten Bremskreis (BK1).

### Figurenbeschreibung

Es zeigen:
- Figur 1a:: eine erste mögliche Ausführungsform der erfindungsgemäßen Bremsanlage mit Hauptbremszylinder, Druckversorgung mit Auslassventil(en) in einem oder zwei Bremskreisen;
- Figur 1b:: Beispiel für eine vereinfachte Druckvolumenkennlinie;
- Figur 1c:: Druckregelmöglichkeiten im Grundsystem Figur 1a;
- Figur 1d:: Ventilschaltung mit AV/EV in Regelsystemen Stand der Technik;
- Figur 1e:: vorteilhafte Ventilschaltung für neue Regelung mit Schaltventilen und einem Auslassventil in einem Bremskreis;
- Figur 1f:: erfindungsgemäßes Einlassventil im Bremskreis;
- Figur 2a:: Druckvolumensteuerung im geschlossenen Bremskreis (AV, ZAV geschlossen);
- Figur 2b:: Druckvolumenkennlinie für Radbremse 1 und Radbremse 2 und Offsetschiebung durch Öffnen Bremskreis;
- Figur 3:: klassische Multiplexregelung in sequentieller Abfolge;
- Figur 3a:: Zyklusverkürzung Multiplexregelung mit AV-Ventil im Druckabbau;
- Figur 3b:: Zeitsteuerung bei Druckabbau über Auslassventil;
- Figur 4:: zeitlicher Verlauf einer bespielhaften Regelung mit 4 Radbremsen;
- Figur 4a: zeitlicher Verlauf einer bespielhaften Regelung mit 4 Radbremsen;
- Figur 4b:: zeitlicher Verlauf einer bespielhaften Regelung mit 4 Radbremsen;
- Figur 5:: vorteilhafter Bremssystemaufbau mit Doppelhubkolben (DHK);
- Figur 5a: Druckabbauregelung im erfindungsgemäßen Multiplexbetrieb mit DHK und Auslassventil;
- Figur 5b: simultane Druckabbau und Druckaufbauregelung im Multiplexbetrieb im DHK-Rückhub und Auslassventil;
- Figur 5c: simultane Druckabbau und Druckaufbauregelung im Multiplexbetrieb im DHK-Vorhub und Auslassventil;
- Figur 5d: geregelter oder gesteuerter Druckabbau in beiden Bremskreisen im geschlossen Kreis über Druckerzeugereinheit und PD3-Ventil;
- Figur 6:: Doppelhubkolbensystem in vorteilhafter zweikreisiger Ausführung.

### Figurenbeschreibung

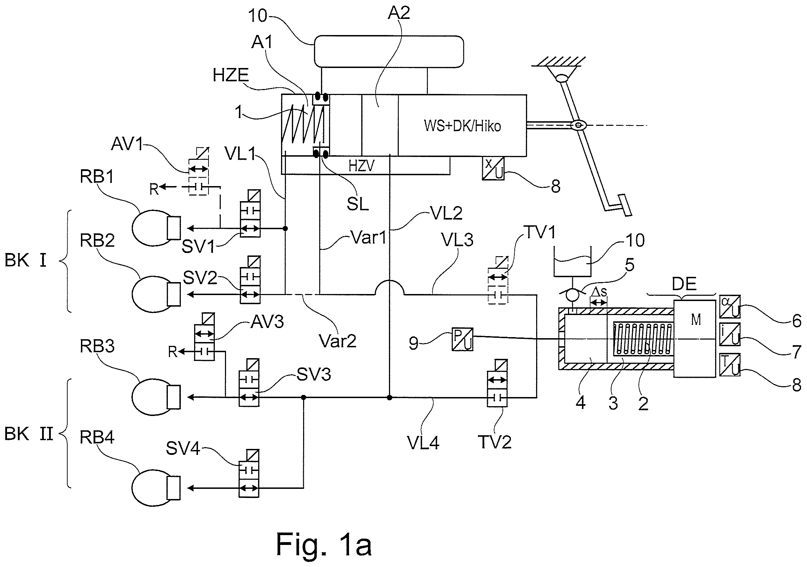

Die **Figur 1a** beschreibt die Basisausführungsform der erfindungsgemäßen Bremsanlage mit Hauptbremszylinder HZE, Druckversorgereinheit DE mit Einfachhubkolben (3) sowie Auslassventil(en) AV1, AV3 in einem oder optional 2 Bremskreisen. Der Bremskreis II ist vorteilhaft der Vorderachse zugeordnet. Das Auslassventil AV1 ist optional, d.h. es muss nicht unbedingt vorgesehen werden.

Die Bremsanlage besteht aus einem Hauptbremszylinder gemäß Stand der Technik bestehend aus einer Hauptbremszylindereinheit HZE, Schwimmkolben SK mit Rückstellfeder 1, einem Druckkolben DK oder Stößel oder einem Hilfskolben HiKo, einem hydraulisch bestätigen Wegsimulator WS und mit entsprechenden Steuerventilen HZV für die Funktionen der Kolbenzylindereinheit wie diese beispielweise im Stand der Technik beschrieben sind.

Folgende Ausführungsformen sind u.a. möglich:
a) Hauptbremszylinder mit zwei Kolben in Form eines Druckkolbens DK und eines Schwimmkolbens SK mit angeschlossenen Wegsimulator, der über ein Ventil absperrbar ist
b) 3-Kolben-System mit Hilfskolben HS für Wegsimulatorbetätigung und Einspeiseventil und/oder mechanischer Durchgriff im Fehlerfall
c) 2-Kolben-System mit Schwimmkolben SK und Hilfskolben HiKo mit Einspeisung.

In allen Ausführungsformen ist die Hauptbremszylindereinheit HZE von der Druckversorgereinheit DE trennbar. Dies kann gemäß der Variante Var2 über die Trennventile TV1 und TV2 oder bei der zweiten dargestellen Variante Var1 über eine Sperrung der Versorgung des Schwimmkolbens erfolgen. Die Ventilbeschaltung des HZE sorgt dafür, dass es keine ungewünschte Rückwirkung auf das Bremspedal BP bei aktiver Druckversorgereinheit DE gibt und in der Rückfallebene (Systemausfall) das Volumen der Hauptbremszylindereinheit HZE in die Radbremsen RB1-4 geführt wird. Zudem ist jeder Radbremse ein Schaltventil SV1-4 in der hydraulischen Verbindung zu dem jeweils zugehörigen Arbeitsraum A1 bzw. A2 des Hauptbremszylinders HZE angeordnet. Für die erfindungsgemäße Bremsanlage ist die konkrete Ausgestaltung des Hauptbremszylinders HZE jedoch nicht von Relevanz.

Das Bremssystem hat vier Schaltventile SV1, SV2, SV3 und SV4, über die die Druckversorgung DE und der Hauptbremszylinder HZE mit den Radbremsen RB1-4 verbunden sind. Die Schaltventile SV1-4 haben vorzugsweise einen geringen Strömungswiderstand und eignen sich für den MUX-Betrieb. Zusätzlich ist ein Auslassventil AV3 in einem Bremskreis für den von MUX unabhängigen Druckabbau in der Radbremse RB3 vorgesehen, welches in der hydraulischen Verbindung zwischen Radbremse RB3 und dem Vorratsbehältnis 10 angeordnet ist. Vorzugsweise ist das Auslassventil AV3 an der Vorderradbremse RB3 eines Bremskreises positioniert, da der Druck in dieser Radbremsen in Extremfällen schnell und ohne großen Zeitverzug abgebaut werden muss, denn die signifikante Bremswirkung geht von der Vorderachse aus.

Die Druckversorgereinheit DE besteht aus einem Elektromotor M, der über eine Spindel 2 einen Kolben 3 antreibt, der das Volumen in der Druckkammer 4 verdichtet oder verschiebt. Der Motor M der Druckversorgereinheit kann zwei oder drei Sensoren aufweisen: a) Winkelgeber 6, b) Strommesssensor 7 zur Messung der Phasenströme des Elektromotors M sowie c) bedarfsweise einen Temperatursensor 8 zur Ermittlung der Spulentemperatur des Elektromotors M.

Die Druckerzeugereinheit DE ist vorzugsweise im Ventilblock oder HZE angeordnet. Die Druckkammer 4 der Druckerzeugereinheit DE ist mit einem Rückschlagventil 5 mit dem Vorratsbehälter 10 in Verbindung. Am Ausgang der Druckerzeugereinheit DE ist ein Drucksensor 9 angeordnet. Der Bremskreis II ist über das Trennventil TV2 und Bremskreis I über das Trennventil TV1 mit der Druckversorgereinheit DE verbunden. Das Trennventil TV1 kann entfallen, in dem eine Trennung einer Kammer mit der Druckversorgereinheit DE in der Rückfallebene erfolgt. Dies kann durch Druckeinspeisung von der Druckerzeugereinheit DE über das Schnüffelloch SL des Schwimmkolbens SK erfolgen.

Zur Druckmodulation bei ABS und Rekuperation wird von der Steuerungseinrichtung und derem Regler die notwendige Druckänderung für Druckaufbau (im Folgenden als P_{auf} bezeichnet) und Druckabbau (im Folgenden als P_{ab} bezeichnet) bestimmt. Die Druckregelung übernimmt die Druckerzeugereinheit DE, in dem simultan oder zeitlich versetzt die einzelnen Räder / Radzylinder mit Druck versorgt werden. Hierzu wird vom E-Motor M über z. B. den Kolben 3 das entsprechende Volumen zur Druckänderung in beiden Richtungen verschoben.

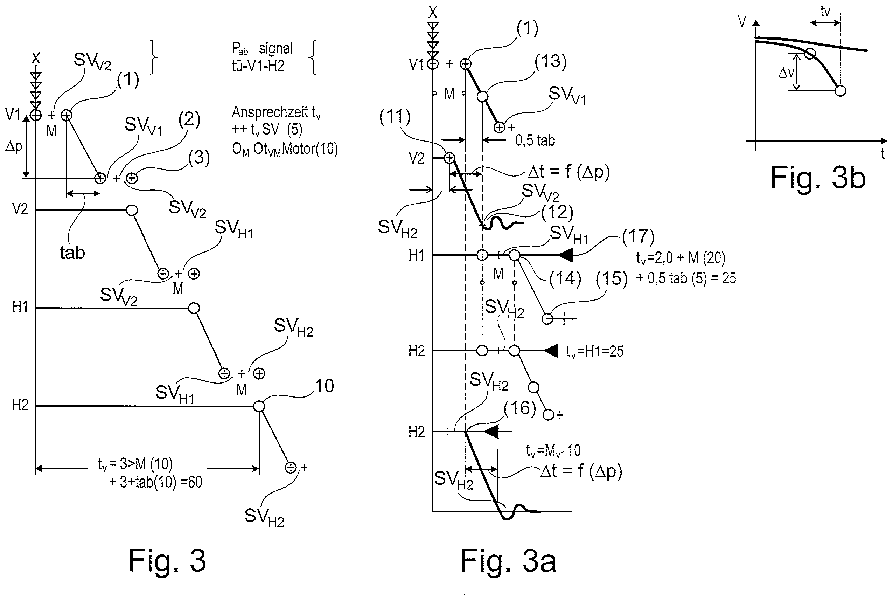

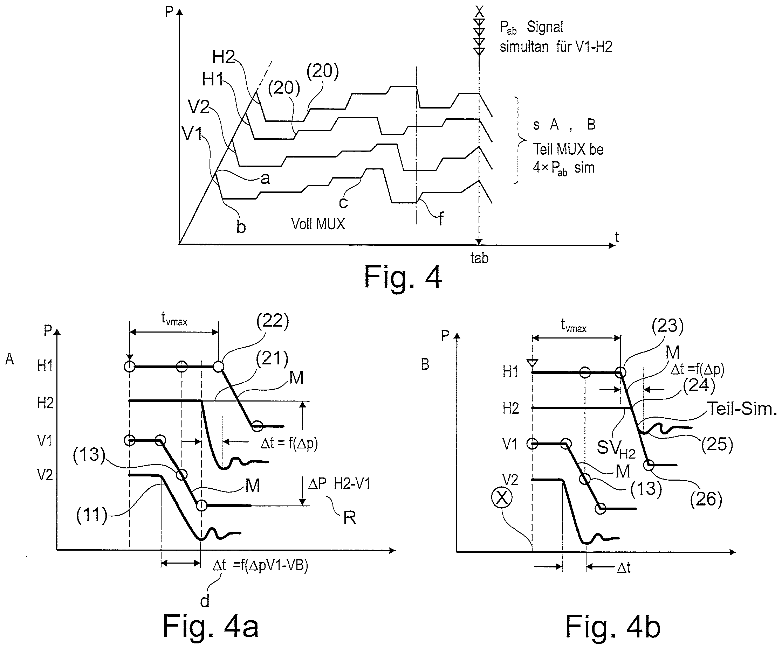

Hierbei könnte die Druckänderung entsprechend des Standes der Technik durch entsprechende Zeitsteuerung mit PWM der Schaltventile und Drucksteuerung des Druckes der DE verändert werden. Dies erfordert jedoch ein sehr genaues PWM-Verfahren mit komplexem Druckmodell. Bevorzugt wird deshalb die Volumensteuerung eingesetzt, wie Sie oben bereits beschrieben wurde. Hierzu werden die Daten der Druck-Volumen-Kennlinie (p-V-Kennlinie - siehe Figur 2a) der jeweils am Druckaufbau oder Druckabbau beteiligten Radbremse RB1-4 im Speicher des Reglers abgelegt. Erfolgt nun vom Regler die Anforderung für eine Druckänderung Δp, so wird zur Druckregelung am Rad das Differenzvolumen ΔV entsprechend vom Kolben in beiden Richtungen ±ΔS verstellt. Hierzu erfolgt die Öffnung eines oder mehrerer Schaltventile, welche nach Beendigung der Volumenverschiebung wieder geschlossen werden. Die Stellung des Kolbens 3, z. B. Hubanfang oder Hubmitte, Ende, ist für die ΔP- Volumensteuerung für die Regelung ohne Bedeutung. Hierbei kann während der Druckänderung eine zeitliche Steuerung eingesetzt werden, um Übergangsfunktionen gegen Ende der Druckänderung umzusetzen, z. B. zur Reduzierung der Druckschwingungen und den damit verbundenen Geräuschen. Wichtig ist eine hohe Dynamik, wenn zwei oder mehr Räder gleichzeitig eine Druckänderung benötigen. Die Erfindung schlägt hierfür vor, dass zur Entlastung der Motordynamik ein oder zwei zusätzliche Auslassventile AV eingesetzt werden. Bei der Volumensteuerung ist insbesondere auch das Druckniveau in der Druckerzeugereinheit DE und in den Rädern von Bedeutung. Günstig ist hierbei, dass das Druckniveau bei Druckänderung dem Ausgangsdruck des zu regelnden Rads entspricht. Damit wird eine schnelle und geräuscharme Druckregelung erzielt. Die Zeitabläufe werden in Figuren 3, 3a, 3b und Figuren 4, 4a, 4b dargestellt.

Als Druckerzeugereinheit DE sind alle Pumpen mit Einfachkolben, Stufenkolben, Doppelhubkolben auch z. B. Zahnradpumpen denkbar, die eine genaue Volumensteuerung ermöglichen.

In der **Figur 1a** erfolgt bei den o. g. Funktionen die Druckerzeugung einkreisig direkt über ein Trennventil TV1 in BK1 (Var2) oder alternativ über ein Schnüffelloch SL auf die Vorderseite des SK-Kolbens (Var.1). Die Druckversorgung in den Bremskreis BK2 erfolgt über ein Trennventil TV2. Bei einer Einspeisung über das Schnüffelloch SL auf die Vorderseite des Schwimmkolbens SK kann optional das Trennventil TV1 eingespart werden, da bei Systemausfall die Druckerzeugereinheit DE von der Hauptbremszylinderwirkung getrennt wird, in dem der Kolben SK sich bewegt und die Druckversorgung DE abtrennt. Alternativ hierzu kann wie gestrichelt gezeichnet, die Druckerzeugereinheit DE über das TV1 direkt mit BK1 verbunden werden (Var 2). Da der SK-Kolben in der Var.1 nur in der Rückfallebene bewegt wird, ist eine spezielle Diagnoseschaltung notwendig, bei der der Schwimmkolben SK bewegt wird und auf Dichtigkeit geprüft wird.

Die **Figur 1b** beschreibt die bekannte Drucksteuerung auf Basis einer vereinfachten Druckvolumenkennlinie, die der MUX-Regelung zugrunde liegt. Entsprechend der geforderten Druckdifferenz Δp wird aus einer Kennlinie eine Volumenänderung ΔV abgelesen, die durch Verstellung des Plungers der Druckerzeugereinheit DE in eine Wegänderung Δs des Kolbens 3 umgesetzt wird. Dies gilt sowohl für Druckaufbau als auch Druckabbau.

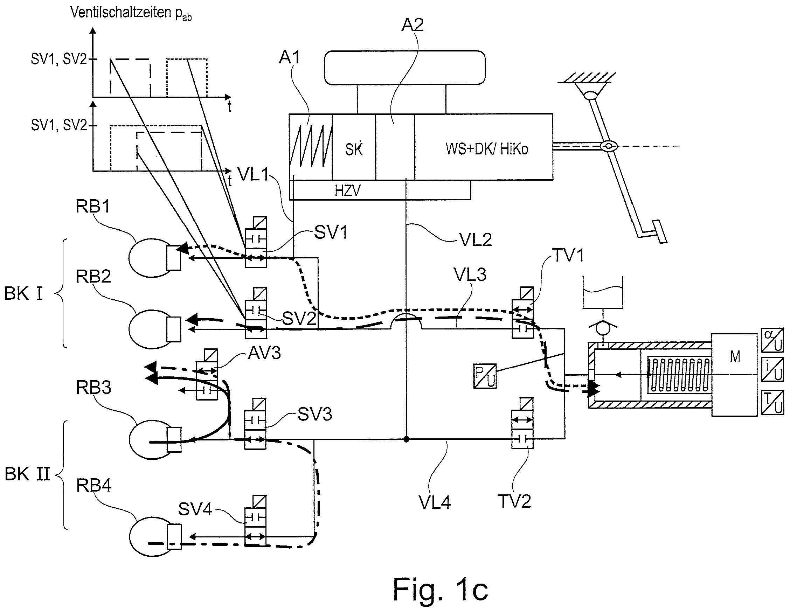

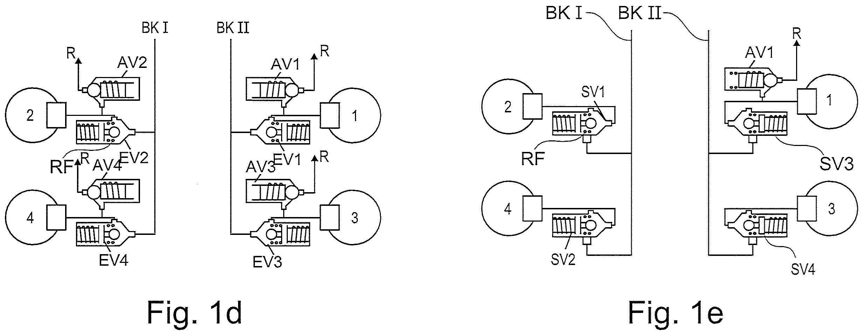

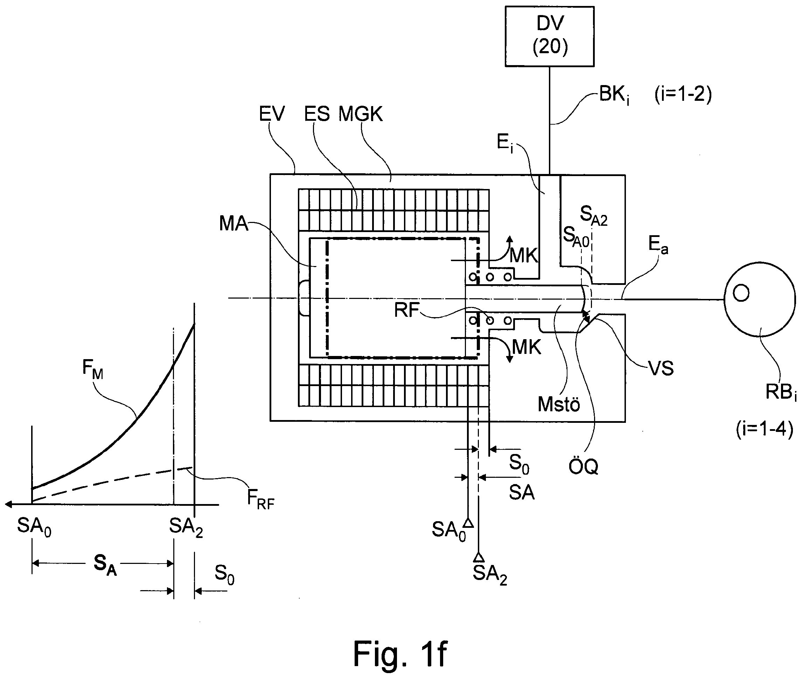

Die Figur 1c zeigt eine grundsätzliche Möglichkeit der Druckregelung in der Basisausführungsform der Figur 1. Das System selbst hat folgende Freiheitsgrade der Druckregelung:
- Druckaufbau und Druckabbau in allen Bremskreisen BKI und BKII vorwiegend mit der Multiplexregelung (Druckregelung mit Druckvolumensteuerung) in allen Radbremszylindern, simultan oder sequentiell;
- Multiplexregelung im Druckaufbau und Druckabbau in Bremskreis I über das geöffnete Trennventil TV1 sowie gleichzeitiger Druckabbau im Bremskreis II über das Auslassventil AV3;
- Multiplexregelung über SV1, SV2, SV4 im Druckaufbau und Druckabbau im Bremskreis I und II für die Radbremsen Radbremse RB1, RB2 und RB4 sowie simultaner Druckabbau in der Radbremse RB3 über geöffnetes Auslassventil AV3 bei geschlossenen Schaltventil SV3;

Der Druckabbau p_{ab} über die Schaltventile SV1 und SV2 im BK I erfolgt vorwiegend über die Druckvolumensteuerung sequentiell oder simultan. Dazu ist das jeweilige Schaltventil SVi immer geöffnet. Bei simultanen Druckabbau p_{ab} bei unterschiedlichen Ausgangsdrücken kann optional von der MUX-Regelung abgewichen werden, in dem die Schaltventile SV1 und SV2 zeitversetzt geöffnet werden und der Druckabbau p_{ab} über ein Schaltventil SV2 gesteuert wird. Das Trennventil TV1 ist beim Druckabbau durchgehend geöffnet. Die Radbremse RB1 hat in diesem Ausführungsbeispiel einen höheren Druck, daher wird das zugehörige Schaltventil SV1 vor dem Schaltventil SV2 geöffnet. Auf Basis des Wissens der Druckdifferenz -der Raddruck in den Radbremsen RB1 und RB2 sowie der Druck in der Druckerzeugereinheit DE sind bekannt - kann die Zeitsteuerung genau bemessen werden. Das Schaltventil SV2 wird dann genöffnet, wenn der Druck der Druckerzeugereinheit DE annähernd erreicht ist. Der weitere Druckabbau erfolgt dann simultan in beiden Radbremszylindern RB1 und RB2 durch Steuerung über den Kolben 3 bei geöffneten Schaltventilen SV1, SV2 und TV1. Wird der Zieldruck eines Rades erreicht, wird das entsprechende Schaltventil SV1 bzw. SV2 geschlossen. Ist ein weiterer Druckabbau in einem Rad gewünscht, kann der weitere Druckabbau dann in der jeweiligen Radbremse erfolgen.

Wie bereits beschrieben, wird zur Systemvereinfachung vorzugsweise auf die PWM-Steuerung, insbesondere auch zur Geräuschreduzierung, verzichtet. Beispielhafte zeitliche Verläufe des Druckabbaus sind in Figur 4a bis 4c beschrieben.

Die **Figur 1d** zeigt eine konventionelle Ventilschaltung für ABS mit vier Einlassventilen EV und vier Auslassventilen AV. Sollte diese auch mit weniger AV für MUX eingesetzt werden mit z. B. Differenzdruck bei MUX, so muss neben diesem Druck der Fehlerfall berücksichtigt werden, dass bei asymmetrischer Fahrbahn plötzlich die Druckerzeugereinheit und zudem die Ventilansteuerung ausfällt, z.B. durch ECU, und sich die Druckerzeugereinheit zugleich auf niedrigem Druckniveau befindet. In diesem Fall hätte z. B. EV1: 130 bar und EV2: 0 bar. Bei Ausfall der Druckerzeugereinheit bedeutet dies, dass bei EV1 die Rückstellfeder des Ventilankers gegen 130 bar öffnen muss. Um dies möglich zu machen, muss der Magnetkreis des Ventils entsprechend groß sein, wodurch das Ventil teuer wird. Als Alternative kann ein druckentlastetes Ventil eingesetzt werden, dessen Kosten jedoch ebenfalls hoch sind.

Bei der Dimensionierung des Ventilsitzes ist zudem zu berücksichtigen, dass er möglichst groß sein soll, um einen kleinen Staudruck zu erzeugen, wenn der Bremsdruck von der Druckerzeugereinheit schnell aufgebaut werden soll. Der Staudruck geht direkt in das Motordrehmoment, Leistung ein.

Die **Figur 1e** zeigt eine geänderte Durchströmung der Schaltventile SV. Das Hydraulikmedium strömt vom Bremskreis bzw. der Druckerzeugereinheit über den Ankerraum zum Ventilsitz hin zum Radzylinder. Tritt der o. g. Fehlerfall ein, so öffnet der Raddruck das Schaltventil. Die Magnetkraft muss jedoch auch gegen 130 bar schließen, was aber bei kleinem Ankerluftspalt in der Ventilendstellung erfolgt. Die Rückstellfeder der Schaltventile SV muss deshalb nur geringfügig verstärkt werden, damit das Schaltventil nicht bei entsprechend hohem Volumenstrom "zureißt". Da konventionelle Einlassventile gegen bis zu 220 bar schließen müssen - bei Fig. 1e 130 bar -, kann bei gleicher Magnetdimensionierung die Ventilsitzfläche erhöht werden, was einen kleineren Staudruck bzw. Strömungswiderstand bedeutet und vorteilhaft für den MUX-Betrieb ist. Die in Figur 1e dargestellte Ventilschaltung ist daher vorteilhaft für die erfindungsgemäße Bremsanlage.

Die **Figur 1f** zeigt eine mögliche Ausgestaltung des erfindungsgemäßen Einlassventils EV und den Anschluss an den Bremskreis BK sowie die Druckversorgung DV und die Radbremsen RBi.

Das Einlassventil EV weist einen Magnetanker MA, einen magnetischen Grundkörper MGK sowie eine Erregerspule ES auf. Wird das Magnetventil EV bestromt, verschiebt die Magnetkraft MK den Anker MA aus der Position S_{A0} in die Position S_{A2} um den Differenzweg S_{A}. Der Magnetanker MA bewegt einen Stößel Mstö um den gleichen Weg, so dass der Stößel Mstö am Ventilsitz VS zur Anlage gelangt und den Auslass Ea des Magnetventils schließt. Der Anker MA hat an dieser Stelle noch einen Restluftspalt S₀ zum magnetischen Grundkörper MGK, der dafür vorgesehen ist, dass der Anker MA bei Abschalten der Bestromung der Erregerspule ES des Ventils EV durch Ummagnetisierungsverluste des Eisenkreises nicht am Magnetgehäuse MGK haftet. Die Rückstellfeder RF bewegt bei Abschalten des Ventilstroms den Anker MA zurück in die Ausgangsstellung. Die Magnetkraft F_{M} steigt dabei bei kleinerem Luftspalt, d.h. zunehmenden Weg, nichtlinear an. Die Rückstellfeder F_{RF} ist derart bemessen, dass die Magnetkraft F_{M} in der Ausgangsstellung S_{A0} größer ist als die Federkraft, damit ein sicheres Schließen des Ventils gewährleistet ist. Die Federkraft steigt mit zunehmenden Weg S_{A} an und ist in der Endstellung S_{A2} ebenfalls geringer als die Magnetkraft F_{M}. Vorzugsweise wird eine lineare Feder eingesetzt, damit die Magnetkraft F_{M} in der Endstellung bei gegebenen Strom deutlich höher ist als die Rückstellkraft, so dass das Ventil mit geringem Strom gehalten werden kann bzw. ein sicheres Schließen auch bei hohen Differenzdrücken zwischen Radbremse und Druckversorgung sichergestellt ist. Das Halten ist auch bei hohen Differenzdrücken sichergestellt, da die Magnetkraft bei geschlossener Ventilposition stark nichtlinear zunimmt. Die Rückstellfeder ist aber auch derart zu dimensionieren, dass die Funktion als stromlos offenes Ventil sichergestellt werden kann und das Ventil immer sicher öffnet.

Der Ausgang Eₐ des Ventils ist an die Radbremsen RBi (RB1-RB4) angeschlossen, der Eingang Eᵢ an einen Bremskreis BKi bzw. an die Druckversorgereinheit DV (20). Durch einen derartigen Anschluss kann das Einlassventil EV sowohl durch die Rückstellfeder RF als auch durch den Druck in der Radbremse geöffnet werden, was insbesondere im Fehlerfall bzw. Störfall der Bremsanlage (z.B. Ausfall der Spannung am Ventil) sehr wichtig ist. Zudem wirkt auch bei hohen Drücken im Bremskreis und kleinen Drücken in der Radbremse nur die Druckdifferenz zwischen Einlass Ei und Auslass Ea auf den Stößel Mstö.

Diese Differenzdruck am Ventil ist im Druckaufbau relativ gering, muss jedoch bei der Federauslegung RF berücksichtigt werden, damit die Druckdifferenz nicht dazu führt, dass beim Druckaufbau das Ventil zugedrückt wird, wenn das Volumen von der Druckversorgung DV in die Radbremse gefördert wird. Ventile mit großem Öffnungsquerschnitt ÖQ bzw. geringen Strömungsverlusten reduzieren diesen Effekt

Insbesondere bei einem Druckaufbau mit Druckvolumensteuerung bzw. Zeitsteuerung mit niedrigem Differenzdruck zwischen Vordruck und Istdruck in der Radbremse können die zuvor beschriebenen Ventile mit großem Öffnungsquerschnitt eingesetzt werden, da die Regelgenauigkeit sehr hoch ist. Dies hat wiederum Vorteile, dass nur geringe Strömungsverluste, insbesondere beim schnellen Druckaufbau (TTL), auftreten und der Antriebsmotor nur eine geringe Leistung für den schnellen Druckaufbau in kürzester Zeit (TTL=150ms) erfordert.

Zudem kann aufgrund der geringen Strömungsverluste der vorteilhaft gestalten Einlassventile ein Druckabbau über die Einlassventile schnell erfolgen. Ein genauer Druckabbau über die Einlassventile EV kann durch entsprechende Steuerung der Kolbenbewegung der Druckversorgereinheit 20 vorgenommen werden. Optional ist es auch möglich das bekannte MUX-Verfahren mit der vorbeschriebenen Ventilschaltung umzusetzen oder mit der Druckabbausteuerung über Auslassventile AV in einem Bremskreis, insbesondere für Verbraucher mit geringem Volumenhaushalt, wie z.B. den Radbremsen der Hinterachse. D.h. es ist auch eine Kombination möglich, dass das MUX-Verfahren in Zusammenhang mit der neuen Ventilbeschaltung nur in zwei Radbremsen (z.B. Vordachse) eingesetzt wird und an zwei weiteren Radbremsen der Druckabbau konventionell erfolgt. Dies würde bedeuten, dass zwei Radbremsen/Aktoren mit Einlass- und Auslassventilen (EV+AV) vorgesehen sind und zwei Radbremsen/Aktoren nur mit Einlass- bzw. Schaltventilen EV. In diesem Fall könnten nur die Radbremsen der Vorderachse mit der erfindungsgemäßen neuen Ventilschaltung gemäß Figuren 1a und 1b bestückt werden, an der Hinterachse eine Standardbeschaltung/Standardventile eingesetzt werden.

Die **Figur 2a** zeigt die Druck-Volumen-Kennlinie eines Rades / Radzylinders mit Anschlussleitungen bis zum Schaltventil SV und Druckgeber. Es sind zwei Kennlinien dargestellt. Kennlinie P_{aufa} entspricht einer so genannten steifen Kennlinie, die andere Kennlinie P_{auf} benötigt erheblich mehr Volumen. Das verursacht z.B. durch Lüftspiel oder schlechte Entlüftung im Extremfall Dampfblasen.

Dies bedeutet, dass die Werte für Vₐ z. B. für ΔP = P₁ - P₂ gleich V₁ - V₂ = ΔVₐ = ΔSₐ entsprechen und bei V_{auf} = Δ_{P} gleich V₁ₐ - V₂ₐ = ΔV = ΔS. Diese Kennlinie für P_{auf} und p_{ab} wird z. B. erstmalig bei der Bandendkontrolle in den Speicher der Steuerungseinrichtung aufgenommen sowohl von den einzelnen Radbremsen als auch bei den Bremskreisen sowohl P_{auf} als auch p_{ab}. Bei jeder Bremsung wird die Kennlinie durch Vergleich des Druckes P mit dem Volumen V_{(ΔS)} gemessen. Stellt sich eine größere Abweichung ein, so können bei Fahrzeugstillstand die Kennlinien, wie bei o. a. Kontrolle, aufgenommen oder adaptiert werden. Bedeutsam ist ferner, dass die Werte zwischen P_{auf} und P_{ab} schwanken können. Normal ist, dass V₀ durch Lüftspiel beim Druckaufbau P_{auf} größer ist, nicht jedoch beim Druckabbau P_{ab}. Nachdem das Lüftspiel eliminiert ist, sind die Kennlinien nahezu gleich.

Bei schlechter Entlüftung oder Dampfblasen verhalten sich die Kennlinien ähnlich jedoch mit größerem Volumen für den entsprechenden Druckwert.

Für die Regelung werden die p-V-Kennlinien für den Druckaufbau p_{auf} und den Druckabbau p_{ab} verwendet.

Die **Figur. 2b** beschreibt die für die Druckregelung ohne Hysterese vereinfachten relevanten Druck-Volumen-Kennlinien im geschlossen Bremskreis bzw. Verschiebung nach Druckabbau mit geöffnetem Auslassventil AV. Ausgehend von einem Druck p1 wird über Sollvergabe des Differenzdruckes Δp die erforderliche Volumenverschiebung ΔV bzw. Wegänderung Δs des Kolbens aus der Kennlinie abgelesen. Diese unterscheiden sich und sind davon abhängig, ob in einem oder mehreren Bremskreisen der Druck verändert wird. Der Kolben wird dann entsprechend verschoben. Wird der Druck über ein oder mehrere Auslassventile abgebaut, kommt es zu einem Volumenverlust in der Druckerzeugereinheit. Für einen weiteren Druckabbau oder Druckaufbau im geschlossenen Bremskreis wird die Wegzuordnung der Druckvolumenkennlinie durch Erfassen des Druckes bestimmt. Dies wird in der Regelung für die Kontrolle des Volumenhaushaltes benötigt, da der Arbeitsraum der Druckerzeugereinheit nur ein begrenztes Volumen hat und somit gegen Ende der Hubbewegung des Kolbens, dieser bei einem Volumenänderungsbefehl an den Anschlag fahren würde. Kommt der Kolben der Druckerzeugereinheit nach einer Druckänderung in die Nähe des Anschlages und steht ein weiterer Druckanstieg an, wird der Kolben bei geschlossenen Schaltventilen SV kurzzeitig zurückgefahren, um aus dem Vorratsbehälter Volumen anzusaugen. Bei der Ausführung mit Doppelhubkolben (Fig. 5-6) wird dieser zurückgefahren oder auf den Rückhubbetrieb umgeschaltet.

Die **Figur 3** zeigt einen Zeitablauf der MUX-Regelung wie sie aus WO 2006/111393 A1 bzw. WO 2010/091883 A1 bekannt ist. Dieses System wird als sog. 4-Kanal-MUX bezeichnet, bei dem außer bei dem kritischen Fall des gleichzeitigen Druckabbaus (simultaner p_{ab}) der Druckabbau p_{ab} pro Radkanal (Zylinder) seriell abgearbeitet wird. Im Worst Case-Scenario verursacht dies eine große Verzugszeit, welche als Folge der einzelnen Ansprechzeiten von Ventil, Motor und Zeit für den jeweiligen Druckabbau p_{ab} große Differenzgeschwindigkeiten oder auch Schlupf bedeutet. Dies vermindert sowohl die Stabilität der Bremsung und verlängert nachteilig den Bremsweg. Optimierungen wurden an Ansprechzeit von Schaltventilen, Motor und Druckabbaugradienten durchgeführt. Die Kosten limitieren jedoch die Optimierung. Der Fall eines gleichzeitigen Druckabbaus p_{ab} für alle Kanäle wurde in der Praxis jedoch selten festgestellt.

Eine weitere Einschränkung besteht bei dem aus WO 2006/111393 A1 bzw. WO 2010/091883 A1 bekannten Regelungskonzept in der notwendigen Priorität für den Druckabbau p_{ab}. Sofern ein Druckabbau erforderlich ist, kann kein Druckaufbau p_{auf} erfolgen. Da in der Regel die Zeit für den Druckaufbau p_{auf} im Regelzyklus bei ca. 200ms liegt und pro Regelzyklus zwei bis drei kleine p_{auf} erfolgen, mit jeweils ca. 10 ms Verzugszeit, wurde dies nicht kritisch bewertet, aber als kleines Defizit für den 4-Kanal-MUX registriert.

Die erfindungsgemäße Bremsanlage mit ihrem Regelungskonzept weist die folgenden Verbesserung auf:
- Einführung eines zusätzlichen Auslassventils an der Vorderachse;
- Verschiedene Steuerungsverfahren und Strategien zur Steuerung und Regelung der Radbremsen, z.B. VA, Kurvenbremsen
- Möglichkeit des Druckaufbaus p_{auf} mit gleichzeitigem Druckabbau p_{ab} (in Figur 5b und Figur 5c beschrieben)

Die **Figur 3** zeigt den Druckverlauf in den einzelnen Radbremsen über die Zeit bei einem herkömmlichen MUX-Betrieb, bei dem der Druck in den Radbremsen zeitlich nacheinander abgebaut wird. V1 und V2 sind die Vorderradbremsen, H1 und H2 sind die Hinterradbremsen. Bei X erfolgt das Signal zum gleichzeitigen Druckabbau p_{ab}. Die Ansprechzeit tᵥSV des Schaltventils SV beträgt ca. 5ms. Die Ansprechzeit tᵥM für den Motor beträgt ca. 10ms. Hierbei ist mitberücksichtigt, dass sich der Kolben der Druckerzeugereinheit zunächst für die verschiedenen Druckniveaus der einzelnen Räder vor der Druckänderung bei (1) erst positionieren muss. Anschließend erfolgt der Druckabbau p_{ab} mit der Annahme von t_{ab} von ca. 10 ms, wobei in dieser Zeit der Druck um Δp gleich ca. 20 bar abgebaut wird.

Die in Figur 3 angenommenen Ansprechzeiten der Schaltventile und des Motors werden für einen objektiven Vergleich auch für die Darstellung des zeitlichen Druckverlaufs in Figur 3a angenommen, welcher dem erfindungsgemäßen Druckverlauf entspricht.

Bei herkömmlichen ABS-Systemen mit 4 Einlass- und 4 Auslassventilen wird vom ABS Regler stets ein Δp bestimmt und dann die Zeit bestimmt, für die das Auslassventil zu öffnen ist, damit sich der geforderte Druckabbau in der Radbremse einstellt. Diese Zeitsteuerung ist bekanntlich Toleranz behaftet, was die Genauigkeit der Druckregelung eingeschränkt. Außerdem entstehen beim Schließen des Auslassventils AV stets immer Druckschwingungen, die nachteilig Geräusche verursachen.

Der ABS Regler bestimmt dabei die benötigte Druckdifferenz Δp im Wesentlichen aus der Radwinkelbeschleunigung und teilweise dem Radschlupf mit Korrekturfaktoren a) Radträgheitsmoment, b) Getriebeschaltstufe und c) Fading-Erkennung.

Im Gegensatz zur Zeitsteuerung wird beim herkömmlichen MUX, wie in Figur 1 und 1a gezeigt, eine Volumensteuerung der Druckversorgung eingesetzt, bei der Δv=Δp entspricht, wobei dies unter Auswertung der Druck-Volumen-Kennlinie des Rades erfolgt. Damit ist die Genauigkeit der Druckregelung viel größer und der zeitliche Druckverlauf kann gegen Ende des Druckabbaus beeinflusst werden, so dass nur geringe Druckschwingungen entstehen.

Bei V1 in Figur 3 wirkt nach (X) tᵥM die Ansprechzeit von tᵥM und tᵥ von SV1. Nach Öffnung des Schaltventils SV1 ist der Motor M in der Lage, den Druck über die Zeit t_{ab} abzubauen. Anschließend wird das SV1 bei (2) wieder geschlossen. Zuvor hat jedoch der Motor über die beschriebene Volumensteuerung der Druckversorgung das geforderte Druckniveau bereits erreicht. Danach stellt sich der Motor bereits bei auf den Druckabbau p_{ab} von Vorderrad V2 ein, was dann nach Öffnung von SV2 von V2 auch erfolgt. Somit ergibt sich in der Reihenfolge V1-H2 eine gesamte Verzugszeit mit o.g. Annahmen von 60 ms. Dies entspricht ungefähr einer Regelabweichung Δv von ca. 15 km/h.

In Figur 3a ist der zeitliche Druckverlauf für das erfindungsgemäße Regelungskonzept dargestellt. Der Druckabbau p_{ab} bei der Vorderradbremse V1 zum Zeitpunkt (1) entspricht (1) in Figur 3. Bei der Vorderradbremse V2 wird das zusätzliche Auslassventil AV zum Druckabbau p_{ab} eingesetzt. Der Druckabbau p_{ab} erfolgt nahezu nicht verzögert bei (11) über eine oben beschriebene Zeitsteuerung Δt bei der bei (12) nach Schließen von SV2 die Druckschwingung entsteht. Damit ist die Regelung der Vorderräder V1 und V2, welche bei high-µ einen erheblich größeren Beitrag zur Bremskraftwirkung als die Hinterräder erbringen, nahezu nicht verzögert. Während des Druckabbaus p_{ab} von V1 wird der Motor bei (13) bereits auf die Druckänderung beim Hinterrad H1 vorbereitet. Diese erfolgt dann bei (14) bis (15) per Volumensteuerung mittels der Druckerzeugereinheit DE. Da die Hinterräder H1, H2 oft dasselbe höhere Druckniveau wie V1 oder V2 haben, kann ein simultaner Druckabbau p_{ab} mittels Volumensteuerung erfolgen. Als Alternative hierzu kann bei H2 bei (16) auch ein zeitgesteuerter Druckabbau p_{ab} in den Bremskreis hinein erfolgen. Voraussetzung hierfür ist, dass das MUX Druckniveau in der Radbremse des Hinterrades H2 niedriger liegt als bei dem Hinterrad H1, bei dem mittels Volumensteuerung der Druckabbau erfolgt. Ebenso ist es möglich, dass der Druckabbau in der Hinterradbremse H2 über ein zeitgesteuertes Öffnen des zugehörigen Auslassventils erfolgt.

Varianten der Vorderachsen- und Hinterachsen-Regelung sind in den Figuren 4, 4a, 4b detailliert dargestellt und beschreiben. Ein Vergleich der Verzugszeiten tv zeigt im Vergleich zur herkömmlichen MUX-Methode in Figur 3 bei (10) mit 60ms und (17) mit 25 ms eine signifikante Verbesserung. Dies ist möglich durch Einsatz des zeitgesteuerten Druckabbaus p_{ab} bei V2 und H2 mittels Auslassventil bzw. in den Bremskreis hinein, teilsimultanen p_{ab} bei H1 und H2 und Prioritätssteuerung bei H1 und (13)

Die **Figuren 4 - 4b** zeigen den Druckverlauf mit unterschiedlichen realen Druckniveaus und Varianten der Vorder- und Hinterräder H1, H2, V1 und V2 bei dem erfindungsgemäßen Regelungskonzept.

**Figur 4** zeigt den zeitlichen Druckverlauf V1 bis H2 in verschiedenen Phasen. In der Phase 0-X ist ein Druckverlauf gezeigt, in der aufgrund von unterschiedlichen Druckniveaus in den Radbremsen kein simultaner Druckaufbau p_{auf} und Druckabbau p_{ab} erfolgen kann., was am häufigsten der Fall ist. Dementsprechend ist hier auch der Voll-Multiplexbetrieb wirksam, d.h. genaue Δp-Regelung über Volumensteuerung sowohl für den Druckaufbau p_{auf} als auch für den Druckabbau p_{ab}. Beim Druckaufbau p_{auf} wird manchmal z.B. bei 20 bei gleichzeitiger Druckaufbauforderung ein zeitlich versetzter Druckaufbau p_{auf} bei H1 und H2 erfolgen. Es kann jedoch auch ein teilsimultaner Druckaufbau p_{auf} erfolgen. Ebenso ist ein teilsimultaner Druckabbau, wie dies in Figur 4b gezeigt ist, möglich.

Bei X in Figur 4 erfolgt das Signal p_{ab} zum simultanen Druckabbau in allen Radbremsen, was ohne Zeitverzögerung umgesetzt wird. Diese zwei Varianten A und B werden in Figur 4a und Figur 4b genauer behandelt.

Die **Figur 4a** zeigt die Variante A wiederum beginnend mit dem Ausgangspunkt X mit p_{ab} bei V1 und V2 wie in Figur 3a beschrieben. Beim Vorderrad V1 erfolgt der Druckabbau p_{ab} mittels Volumensteuerung über die Druckerzeugereinheit DE. Für das Hinterrad H2 erfolgt bei 21 ein gesteuert p_{ab} über die zeit dt=f(dp). Dieser Druckabbau erfolgt, wenn ausreichend Differenzdruck Δp zwischen H2-V1 vorhanden ist. Die Druckniveaus aller Räder sind beim erfindungsgemäßen Regelungskonzept oder auch MUX-Verfahren bekannt, so dass auch ein relativ genauer Druckabbau p_{ab} im Hinterrad H2 über die Zeitsteuerung, sprich das Öffnen des Schaltventils SVH2, erreicht wird. Die notwendige Öffnungszeit Δt kann auch aufgrund der Änderung des Druckniveaus von M1 (MUX) flexibel angepasst werden. Der Druckabbau p_{ab} des Hinterrades H1 erfolgt ebenfalls per Volumensteuerung, ausgehend von der Vorbereitung bei 13 und dann durch Öffnen des zugehörigen Schaltventils bei 22.

Als Ergebnis ergibt sich ein relativ kleines tvmax wie in Figur 3a beschreiben. Bei 11 erfolgt der zeitgesteuerte Druckabbau p_{ab} für das Vorderrad V2. Auch hier ist die Druckdifferenz zum Vorratsbehälter bekannt und somit eine genaue Drucksteuerung durch das zeitgesteuerte Öffnen des Auslassventils möglich. **Figur 4b** zeigt die Variante B zum teilsimultanen Druckabbau an den Hinterrädern H1 und H2 ausgehend von einer relativ geringen Druckdifferenz bei den Hinterrädern H1 zu H2. Hier erfolgt nach Vorbereitung bei 13 bei 23 der Druckabbau p_{ab} mit MUX, d.h. Volumensteuerung mittels der Druckerzeugereinheit. Bei 24 wird das Hinterrad H2 in den Druckabbau p_{ab} durch Öffnen des zum Hinterrad H2 gehörenden Schaltventils SVH2 zugeschaltet. Bei 25 ist der gesteuerte Druckabbau p_{ab} für H2 erreicht, weshalb das Schaltventil SVH2 geschlossen wird. Bei 26 ist dann über die Volumensteuerung das Δp für das Hinterrad H1 erreicht, weshalb bei 26 das Schaltventil SVH1 geschlossen wird.

Beide Verfahren ermöglichen eine kurze Verzugszeit. Teilweise erzeugt der gesteuerte Druckabbau p_{ab} die Druckschwingungen, welche aber nur im Extremfall bei gleichzeitigem Druckabbau p_{ab} auftreten.

Zusammenfassend und ergänzend ist folgendes kennzeichnend:
- der Druck eines jeden Rades wird zu Beginn und Ende eines Druckabbaus p_{ab} (Figur 4, 4a) im Speicher abgelegt; beide Werte werden als Referenz für die folgenden Druckänderungen des Rades oder der nachfolgenden Räder verwendet;
- der Druck des letzten Druckaufbaus p_{auf} (Figur 4) wird im Speicher abgelegt wird und bildet somit die Basis für die Einstellung des Druckes der Druckerzeugereinheit DE als Vorbereitung des nachfolgenden Druckabbaus p_{ab};
- die Auslassventile AV sind zeitgesteuert, wobei hierfür die Druckdifferenz zum Vorratsbehälter berücksichtigt wird; ein Rad der Vorderachse ist lediglich über Schaltventil SV mit dem Bremskreis verbunden, wobei dem zweiten Rad der Vorderachse ein Schaltventil SV hin zum Bremskreis und ein Auslassventil AV hin zum Vorratsbehältnis zugeordnet ist, so dass Schaltventile SV von Hinterachse zum p_{ab} zeitgesteuert werden, während MUX die Räder der Vorderachse mit niedrigem Druckniveau steuert, bei der die Zeitsteuerung t_{ab} der Schaltventile SV der Hinterachse HA den Differenzdruck Δp auswertet;
- Neben dem Differenzdruck wird für die Zeitsteuerung (Ventile werden für eine vorbestimmte Zeit geöffnet) das Δp des entsprechenden Auslassventils AV aus der Druck-Volumen-Kennlinie ausgewertet. Prioritätssteuerung des MUX mit Orientierung auf Fahrstabilität bei Bremsweg, z.B. Rad der Vorderachse VA hat Priorität und weitere bei positiven µ-Sprung mit höchster negativer p_{ab} oder positiver Beschleunigung p_{auf}, da hier das zu regelnde Δp am größten ist;
- Die Druckänderung per Volumensteuerung mittels der Druckerzeugungseinheit und der parallel verwendeten zeitgesteuerten Öffnung eines Auslassventils oder Schaltventils bildet den kombinierten MUX-Regler;
- Bei der Zeitsteuerung muss das entsprechende Volumen entsprechend der vom Regler bestimmten Druckänderung Δp bei der Volumenförderung berücksichtigt werden.

Die **Figur 5** beschreibt eine weitere Ausführungsform der erfindungsgemäßen Druckversorgereinheit DE mit Druckregelung mit Hauptbremszylinder, Hauptbremszylinderventile HZV, Druckversorgung mit Doppelhubkolben Schalt- und Auslassventil(en).

Dabei ist der Hauptbremszylinder HZE mit je einem Bremskreis BKI und BKII verbunden. Für die Abtrennlogik gilt das gleiche wie bei Figur 1a. Die Vorhubkammer 4 des Doppelhubkolbens 3 ist mit Bremskreis BKI über das Trennventil TV1 und mit BK II über das Trennventil TV2 verbunden. Die Rückhubkammer 4a über das Trennventil TV2b mit BK II und über HZE mit BK I. Die Übertragung wird vorzugsweise über den Schwimmkolben SK durchgeführt. Vorderkammer 4 und Rückhubkammer 4a können über ein Schaltventil ShV miteinander hydraulisch verbunden werden. Dieses Schaltventil ShV ermöglicht einen Kurzschluss zwischen beiden Kammern und wird insbesondere beim Vorhub (nach links) zur Reduzierung der hydraulisch wirksamen Fläche des Kolbens 3 genutzt. Die Rückhubkammer 4a des DHK 3 ist über das Schaltventil PD1 mit dem Vorratsbehälter 10 verbunden. Beide Kammern 4 und 4a sind zudem jeweils über ein Rückschlagventil mit dem Vorratsbehälter 10 verbunden. Diese Systemkonfiguration bietet folgende Freiheitsgrade:
- Druckaufbau und Druckabbau in allen Bremskreisen mit der Multiplexregelung (Druckregelung mit Druckvolumensteuerung) in allen Radbremszylindern simultan oder sequentiell über die Trennventile TV1, TV2 und PD1 und den Schaltventilen SV1-SV4 der Radbremsen RB1-RB4;
- Multiplexregelung im Druckaufbau und Druckabbau im Bremskreis I und Druckabbau im Bremskreis II über Auslassventile AV3, ZAV;
- Multiplexregelung beim gleichzeitigen Druckabbau im Bremskreis BK I und Druckaufbau im BK II über Doppelhubkolbensteuerung;
- Multiplexregelung im gleichzeitigen Druckabbau im Bremskreis BK II und Druckaufbau im BK I über Doppelhubkolbensteuerung;
- Jederzeit Druckabbau RB3 über AV3 bei Multiplexregelung.

Die **Figur 5a** zeigt exemplarisch einen Teil der Druckregelmöglichkeiten, die zeitlich parallel zu einander ablaufen können:
- Kontrollierter Druckabbau in RB1 über SV1, TV1 über Druckvolumensteuerung mittels Rückhub des Doppelhubkolbens 3 bei geöffneten PD1-Ventil oder alternativ Drucksteuerung Druckabbaus über Druckschätzung auf Basis der Phasenstrommessung im Bremskreis I;
- Kontrollierter Druckabbau in RB2 über SV2, TV1 über Druckvolumensteuerung mittels Rückhub des Doppelhubkolbens 3 bei geöffneten PD1-Ventil oder alternativ Drucksteuerung Druckabbaus über Druckschätzung auf Basis der Phasenstrommessung im Bremskreis I;
- Druckabbau in RB3 über AV3 mit Zeitsteuerung des Auslassventils AV3;
- Druckabbau in RB4 mittels Doppelhubkolben 3 mit Zeitsteuerung eines der Schaltventile SV4 bzw. PD1, wobei das jeweils andere Ventil ebenfalls zu dieser Zeit geöffnet sein muss oder alternativ Drucksteuerung des Druckabbaus über Druckschätzung auf Basis der Druckmessung in Bremskreis II;

Bei simultanem Druckabbau p_{ab} bei unterschiedlichen Ausgangsdrücken kann optional von der MUX-Regelung abgewichen werden, in dem die Schaltventile SV1 und SV2 zeitversetzt geöffnet werden. Das Trennventil TV1 ist dabei beim Druckabbau durchgehend geöffnet. Da in RB1 ein höherer Druck herrscht, wird das Schaltventil SV1 vor dem Schaltventil SV2 geöffnet. Auf Basis des Wissens der Druckdifferenz (Raddruck RB1 und RB2 und Druck in der Vorhubkammer der Druckversorgereinheit) kann die Zeitsteuerung genau bemessen werden. Kann der Druck in der Vorhubkammer der Druckversorgereinheit DE nicht genau bestimmt werden, weil gleichzeitig ein Druckabbau über ZAV in Radbremse RB4 erfolgt und TV2 geschlossen ist, kann der Druck in der Vorhubkammer über Druckschätzung p/i aus dem Drehmoment des Elektromotors genutzt werden. Das Schaltventil SV2 wird dann genöffnet, wenn der Druck der Druckerzeugereinheit DE annähernd erreicht ist. Der weitere Druckabbau erfolgt dann simultan in beiden Radbremszylindern durch Steuerung über den Kolben 3 bei geöffneten SV1, SV2 und TV1. Wird der Zieldruck eines jeweiligen Rades erreicht, wird das entsprechende Ventil SV1 bzw. SV2 geschlossen. Ist ein weiterer Druckabbau in einem Rad gewünscht, kann ein weiterer Druckabbau dann nur in einer Radbremse erfolgen.

Parallel zur Druckabbausteuerung im MUX-Betrieb kann in BK II der Druck über Zeitsteuerung des AV3 abgebaut werden. Dies kann zeitlich frei bestimmt werden, weil über Schließen von SV3 die anderen Radbremszylinder nicht beeinflusst werden. Auch die zeitliche Ansteuerung des Druckabbaus in Radbremse RB4 kann bei Druckabbau des BK I im MUX-Betrieb frei gewählt werden.

Die **Figur 5b** zeigt exemplarisch einen Teil der Druckregelmöglichkeiten, die zeitlich parallel zu einander ablaufen können
- Kontrollierter Druckabbau in RB1 über die Schaltventile SV1 und TV1 über Druckvolumensteuerung mittels Rückhub des Doppelhubkolbens 3 bei geschlossenem PD1-Ventil;
- Kontrollierter Druckabbau in RB2 über die Schaltventile SV2 und TV1 über Druckvolumensteuerung mittels Rückhub des Doppelhubkolbens 3 bei geschlossenem PD1-Ventil;
- Druckabbau in RB3 über das Auslassventil AV3 mit Zeitsteuerung Δt (Öffnen des AV3-Ventil für den Zeitraum Δt);
- Druckaufbau in RB4 über das Trennventil TV2b (ZAV) mit Druckvolumensteuerung mittels Rückhub des Doppelhubkolbens bei geschlossenem PD1-Ventil.

Beim simultanem Druckabbau und Druckaufbau in Radbremse RB4 ist die Druckaufbaudynamik durch die Druckabbaudynamik und die wirksamen Kolbenflächen und hydraulischen Differenzdrücke bestimmt. Dies ist in der Regelung zu berücksichtigen. Wird der Zieldruck in Radbremse RB4 erreicht, wird das Schaltventil SV4 geschlossen. Soll der Druck in BKI weiter abgebaut werden, wird das PD1 für einen weiteren Druckabbau im Bremskreis I geöffnet.

**Figur 5c** zeigt exemplarisch einen Teil der Druckregelmöglichkeiten, die zeitlich parallel zu einander ablaufen können:
- Kontrollierter Druckaufbau in RB1 über die Schaltventile SV1 und TV1 über Druckvolumensteuerung mittels Vorhub des Doppelhubkolbens 3 bei geöffnetem PD1-Ventil;
- Kontrollierter Druckaufbau in RB2 über die Schaltventile SV2 und TV1 über Druckvolumensteuerung mittels Vorhub des Doppelhubkolbens 3 bei geöffnetem PD1-Ventil;
- Druckabbau in RB3 über das Auslassventil AV3 mit Zeitsteuerung des Auslassventils AV3;
- Druckabbau in RB4 über den Doppelhubkolben 3 mit Zeitsteuerung des Schaltventils SV4 oder PD1-Ventil.

Für die vielen Funktionen des Druckabbaus p_{ab} in einem Bremskreis und Druckaufbau p_{auf} in dem anderem Bremskreis besteht die Möglichkeit, dass sich der Schwimmkolben SK des Hauptbremszylinders HZE bewegt. Zur Verhinderung kann ein Sperrelement SE im BK1 oder BK2 angeordnet, das direkt auf den SK als mechanische Blockierung wirkt. Das Sperrelement kann auch Bestandteil des HZV sein.

Mit diesem Druckregelsystem lassen sich die in 5b und 5c beschriebenen Funktionen von p_{auf} in einem Bremskreis und p_{ab} im anderen Bremskreis realisieren, unabhängig vom Druckniveau der Bremskreise.

**Figur 5d** zeigt exemplarisch den Druckabbau in Bremskreis I und Bremskreis II, der beim Druckabbau aus hohen Drücken eingesetzt wird. Dabei wird bei offenen Trennventilen TV1 und TV2 folgendes realisiert:
- Kontrollierter Druckaufbau in RB1 durch Zeitsteuerung der Ventile SV1 und PD3 über Drucksteuerung des Druckabbaus über Druckschätzung auf Basis der Phasenstrommessung im Bremskreis I;
- Kontrollierter Druckaufbau in RB2 durch Zeitsteuerung der Ventile SV2 und PD3 über Drucksteuerung des Druckabbaus über Druckschätzung auf Basis der Phasenstrommessung im Bremskreis I;
- Kontrollierter Druckaufbau in RB3 durch Zeitsteuerung der Ventile SV3 und PD3 über Drucksteuerung des Druckabbaus über Druckmessung auf Basis des Druckgebers im Bremskreis BK II;
- Kontrollierter Druckaufbau in RB4 durch Zeitsteuerung der Ventile SV4 und PD3 über Drucksteuerung des Druckabbaus über Druckmessung auf Basis des Druckgebers im Bremskreis BK II.

Für einen radindividuellen Druckabbau können ähnlich wie in Figur 5a dargestellt die Schaltventile SV1- SV4 zeitlich versetzt geschaltet werden.

Nicht dargestellt ist die Möglichkeit des Druckabbaus über PD1-Ventil, die nach dem ähnlichen Verfahren wie PD3-Ventil erfolgt. Der Druckabbau kann von allen Bremskreisen über PD1-Ventil erfolgen. Auch kann der Druckabbau sowohl über PD3 als auch PD1-Ventil erfolgen. Dies ist ähnlich wie Figur 5a mit dem Unterschied, dass der Druck aller Radbremsen über die Druckversorgereinheit abgebaut wird und somit die Vorteile eines Druckabbaus im geschlossen Bremskreis liefert, was insbesondere nach Abschluss eines Bremsvorganges (z.B. nach ABS-Betrieb) sicherheitstechnische Vorteile hat.

Die **Figur 6** beschreibt ein System mit Doppelhubkolben in vorteilhafter zweikreisiger Ausführung. Der Aufbau von THZ, DE und Ventilschaltung für Drucksteuerung ABS mit MUX und AV ist identisch zur Figur 5c.

Im Gegensatz zur Figur 5c wirkt die Druckversorgung im Vorhub auf Bremskeis II und die Rückseite des Schwimmkolbens SK. Dieser überträgt das Volumen und den Druck in den Bremskreis I. Ist der Doppelhubkolben 3 nahe der Endstellung angelangt, wird er umgesteuert und im Rückhub betrieben und wirkt auf BK I. Dann wirkt über den Rückhub Druck auf die Vorderseite des Schwimmkolbens SK. Dieser überträgt den Druck wiederum auf den Bremskreis BK II. Der SK-Kolben ist immer wie bei heutigen THZ mit seinen Dichtungen aktiv.

Der Doppelhubkolben 3 hat zusätzlich ein Bypassventil ShV, welches im Wesentlichen unter drei Bedingungen geschaltet wird:
a) Bei hohem Druck wird zur Reduzierung der Kolbenkraft das Volumen des Vorhubes auch zum Druckausgleich auf die Rückseite des Doppelhubkolbens 3 geleitet;
b) Bei ABS-Regelung, auch MUX-Regelung, wird der Doppelhubkolben 3 auf einkreisig über das ShV-Ventil umgeschaltet;
c) Druckabbau p_{ab} aus hohem Druckniveau erfolgt in beiden Bremskreisen BK I und BK II gleichzeitig.

Diese Ventilschaltung hat für die Schwimmkolbenposition zur Folge, dass die Rückstellfeder 1 den Schwimmkolben SK an den rechten Anschlag bewegt oder in der Mittelstellung verharrt. Der Druckgeber 9 misst den Druck im BK II und kann bei "einkreisiger" Schaltung für die Regel- und Steuerfunktionen den Druck in beiden Bremskreisen auswerten.

Für spezielle Funktionen beim Druckaufbau p_{auf} in BK I und Druckabbau p_{ab} in BK II und umgekehrt, ist es von Vorteil, in den BK II in der Verbindung zum THZ oder in Bremskreis BK 1 ein Sperrelement SE einzusetzen, welches die Bewegung des Schwimmkolbens SK verhindert. Das Sperrventil SE kann auch Bestandteil des HVZ sein.

Dieses System beinhaltet noch das zusätzliche Potential, den Druck in BK II über den DHK Kolben 3 und getrennt von BK I über die Ventile TV2b und PD1 abzubauen.

Diese Lösung hat Vorteile bei der Anwendung für unterschiedliche Druckniveauansteuerung an beiden Achsen bei Rekuperation. Hierzu muss dann das Sperrelement SE am SK oder im BK I eingesetzt werden.

Diese in Figuren 5-6 beschriebenen Funktionen neben der zusätzlichen überlagerten Zeitsteuerung über Auslassventil(e) geben dem erfindungsgemäßen MUX-System eine sehr gute Performance mit hoher Regelungsdynamik und - genauigkeit bei deutlich geringerem Aufwand als die radindividuelle Regelung mit Einlass- und Auslassventilen.

## Patentansprüche

1. Bremsanlage für Kraftfahrzeuge, mit
- einer Betätigungseinrichtung (BP), insbesondere in Form eines Bremspedals,
- einem Wegsimulator (WS) zur Erzeugung einer Rückwirkungskraft auf die Betätigungseinrichtung (BP),
- einer ersten Kolben-Zylinder-Einrichtung (HZE), wobei die Kolben-Zylinder-Einrichtung (HZE) mindestens einen Kolben (DK) aufweist und mindestens ein Arbeitsraum (A₁, A₂) über mindestens eine hydraulische Verbindungsleitung (VL₁, VL₂) mit mindestens einer Radbremse (RB₁₋₄) eines Bremskreises (BK1, BK2) in Verbindung ist,
- einer Steuerungseinrichtung,
wobei jedem Bremskreis (BK1, BK2) mindestens eine Radbremse (RB1, RB2, RB3, RB4) zugeordnet ist, und jede Radbremse (RB1, RB2, RB3, RB4) über jeweils ein ihr zugeordnetes steuerbares Schaltventil (SV1, SV2, SV3, SV4) mit der ihr zugeordneten Verbindungsleitung (VL₁, VL₂) verbindbar ist,
wobei das steuerbare Schaltventil (SV1, SV2, SV3, SV4) stromlos geöffnet ist,
und mindestens einer elektromotorisch angetriebenen Druckversorgereinheit (DE), die einen Doppelhubkolben (3), eine erste Arbeitskammer (4) und eine zweite Arbeitskammer (4a) aufweist, wobei mittels der Druckversorgereinheit (DE) der Bremsdruck wahlweise in einer oder mehreren Radbremsen (RB1, RB2, RB3, RB4) gleichzeitig abbaubar ist,
wobei die erste Arbeitskammer (4) über ein erstes schaltbares Ventil (PD3) und die zweite Arbeitskammer (4a) über ein zweites schaltbares Ventil (PD1) mit einem Vorratsbehälter (10) verbindbar sind,
**dadurch gekennzeichnet, dass**
der Bremsdruck mittels einer Herstellung einer hydraulischen Verbindung einer der Arbeitskammern (4, 4a) der Druckversorgereinheit (DE), insbesondere des Doppelhubkolbens (3), mit dem Vorratsbehälter (10) durch Öffnen des jeweiligen schaltbaren Ventils (PD1, PD3) wie folgt abbaubar ist:
a) in mindestens einer oder mehreren Radbremsen (RB1, RB2, RB3, RB4) erfolgt der kontrollierte Druckabbau über das der jeweiligen Radbremse (RB1, RB2) zugeordnete steuerbare Schaltventil (SV1, SV2) über eine Druckvolumensteuerung mittels einem Rückhub des Doppelhubkolbens (3) in den Vorratsbehälter (10) und/oder,
b) in mindestens einer oder mehreren Radbremsen (RB1, RB2, RB3, RB4) erfolgt der kontrollierte Druckabbau über das der jeweiligen Radbremse (RB1, RB2) zugeordnete steuerbare Schaltventil (SV1, SV2) über eine Druckvolumensteuerung mittels einem Vorhub des Doppelhubkolbens (3) in den Vorratsbehälter (10).

2. Bremsanlage nach Anspruch 1, **dadurch gekennzeichnet, dass** entweder nur einer einzigen Radbremse (RB1, RB3) ein Auslassventil (AV1, AV3) zugeordnet ist oder jeweils nur einer Radbremse (RB1, RB3) jedes Bremskreises (BK1, BK2), ein Auslassventil (AV1, AV3) zugeordnet ist, wobei das Auslassventil (AV1, AV3) in einer hydraulischen Verbindung zwischen der Radbremse und dem Druckmittelvorratsbehältnis (10) angeordnet ist, wobei kein weiteres Ventil zwischen dem Auslassventil (AV1, AV3) und dem Druckmittelvorratsbehältnis (10) angeordnet ist.

3. Bremsanlage nach Anspruch 1 oder 2, **dadurch gekennzeichnet, dass**
einer Vorderradbremse (RB1, RB2, RB3, RB4) ein Auslassventil (AV1, AV3) zugeordnet ist
und/oder
mindestens ein Drucksensor (9) zur Ermittlung des Drucks in mindestens einem Bremskreis (BK1, BK2) dient
und/oder die Schaltventile (SV1, SV2, SV3, SV4) digitale Ventile sind und stromlos geöffnet sind.

4. Bremsanlage nach einem der Ansprüche 1 bis 3, **dadurch gekennzeichnet, dass**
- die Druckversorgereinheit (DE) nur einen Arbeitsraum (4) aufweist, wobei der Arbeitsraum (4) mittels zweier weiterer hydraulischen Verbindungsleitungen (VL3, VL4) mit beiden Bremskreisen (BK1, BK2), insbesondere mit deren Verbindungsleitungen (VL1, VL2) oder dem zugehörigen Arbeitsraum (A1), in Verbindung ist, wobei zur Absperrung und wahlweisen Öffnung mindestens einer der beiden weiteren Verbindungsleitungen (VL3, VL4) in dieser ein Trennventil (TV1, TV2) angeordnet ist
und/oder
- die Steuerungseinrichtung einen Speicher aufweist, in dem der in jeder Radbremse (RB1, RB2, RB3, RB4) eingestellte Ist-Radbremsdruck (p_{RBist,i}) abgelegt ist, wobei die Steuereinrichtung anhand des gespeicherten Ist-Radbremsdrucks (p_{RBist,i}) und des Soll-Radbremsdrucks (p_{RBsoll,i}), insbesondere unter Berücksichtigung der Druckvolumenkennlinie der Radbremse(n), die Zeit (t_{ab}) bestimmt, für die das Auslassventil (AV1, AV3) zur Erreichung des Soll-Radbremsdrucks (p_{RBsoll,i}) in der bzw. den Radbremse(n) zu öffnen ist, und dass die Steuerungseinrichtung das Auslassventil (AV1, AV3) nach Ablauf der Zeit (t_{ab}) schließt.

5. Bremsanlage nach Anspruch 4, **dadurch gekennzeichnet, dass** die Steuereinrichtung den Bremsdruck in der Radbremse (RB1, RB3), welcher ein Auslassventil (AV1, AV3) zugeordnet ist, über das für eine zuvor berechnete Zeit (t_{ab}) geöffnete Auslassventil (AV1, AV3) in das Vorratsbehältnis (10) abbaut, wobei die Steuerungseinrichtung zum gleichzeitigen Druckabbau (p_{ab}) oder Druckaufbau (p_{auf}) in der anderen Radbremse (RB2, RB4) des selben Bremskreises (BK1, BK2) und/oder mindestens einer weiteren Radbremse (RB1, RB2, RB3, RB4) des anderen Bremskreises (BK1, BK2) das bzw. die jeweiligen zugeordneten Schaltventile (SV1, SV2, SV3, SV4) öffnet und den Sollbremsdruck in dieser bzw. diesen Radbremsen mittels entsprechender Ansteuerung der Druckversorgereinheit (DE) einstellt bzw. einregelt.

6. Bremsanlage nach einem der vorhergehenden Ansprüche, **dadurch gekennzeichnet, dass** das eine einer Radbremse (RB1, RB3) eines Bremskreises (BK1, BK2) zugeordnete Auslassventil (AV1, AV3) zum Druckabbau (p_{ab}) in beiden Radbremsen (RB1, RB2 bzw. RB3, RB4) dient, wobei die Steuerungseinrichtung zum gemeinsamen Druckabbau (p_{ab}) beide Schaltventile (SV1, SV2 bzw. SV3, SV4) sowie das jeweilige Auslassventil (AV1 bzw. AV3) öffnet, insbesondere die Steuerungseinrichtung während des Öffnens der beiden Schaltventile (SV1, SV2 bzw. SV3, SV4) den Bremskreis (BK1 bzw. BK2) durch Verschließen des zugehörigen Trennventils (TV1 bzw. TV2) oder durch Festsetzen des Kolbens (SK) des ersten Kolben-Zylinder-Systems (HZE) von der Druckversorgereinheit (DE) trennt.

7. Bremsanlage nach einem der vorhergehenden Ansprüche, **dadurch gekennzeichnet, dass** die Steuerungseinrichtung zum simultanen oder zeitlich versetzten Druckabbau und/oder zum Druckaufbau
- mittels der Druckversorgereinheit (DE) einen Druck in ihrem mindestens einen Druckraum (4, 4a) einstellt und die Schaltventile (SV1, SV2, SV3, SV4) simultan oder zeitlich versetzt öffnet und/oder schließt, um den jeweils in den Radbremsen erforderlichen Soll-Druck einzustellen, wobei mittels des mindestens einen Auslassventils (AV1, AV3) ein Druckabbau in der dem Auslassventil zugeordneten Radbremse bzw. Radbremsen (RB1, RB3) unabhängig von der Druckversorgereinheit (DE) erfolgt
und/oder
- die Druckversorgereinheit (DE) unter Berücksichtigung der in den Radbremsen (RB1, RB2, RB3, RB4) herrschenden oder berechneten Radbremsendrücke ansteuert, wobei die Druckversorgereinheit (DE) den für die jeweilige(n) Radbremse(n) einzustellenden Soll-Druck bei geöffnetem bzw. geöffneten Schaltventil(en) (SV1, SV2, SV3, SV4) erzeugt und nach Erreichen des Soll-Drucks die Steuerungseinrichtung das bzw. die Schaltventil(e) (SV1, SV2, SV3, SV4) zum Halten des Soll-Drucks in der bzw. den Radbremse(n) schließt, wobei mittels des mindestens einen Auslassventils (AV1, AV3) ein Druckabbau in der dem Auslassventil zugeordneten Radbremse (RB1, RB3) unabhängig von der Druckerzeugungseinheit (DE) erfolgen kann.

8. Bremsanlage nach einem der vorhergehenden Ansprüche, **dadurch gekennzeichnet, dass** die Steuerungseinrichtung einen Speicher aufweist, in dem der in jeder Radbremse (RB1, RB2, RB3, RB4) eingestellte Ist-Radbremsdruck (p_{RBist,i}) abgelegt und/oder in einem Regelmodell die wahrscheinlichen Bremsdrücke (p'_{RBist,i}) jeder Radbremse (RB1, RB2, RB3, RB4) fortwährend berechnet und mit gemessenen Werten aktualisiert werden, wobei die Steuereinrichtung zum gleichzeitigen Druckabbau in mindestens zwei Radbremsen, insbesondere eines Bremskreises, auf unterschiedliche Solldrücke in den Radbremsen die Druck-Volumen-Kennlinie jeder der beteiligten Radbremse (RB1-4) auswertet und anhand des zu erzeugenden niedrigsten Soll-drucks den hierfür benötigten Kolbenweg (ds) des Kolbens (3) berechnet und den Kolben (3) um den Kolbenweg (ds) mittels des Antriebes (M, 2) verstellt, wobei dabei das Schaltventil SVm der Radbremse RBm, deren Soll-druck P_{soll,m} am niedrigsten ist, solange geöffnet bleibt, bis sich der Soll-Druck p_{soll,m} in der Radbremse RBm eingestellt hat, und dass die Steuerungseinrichtung für die Schaltventile SVn der übrigen Radbremsen RBn einzeln die zeitliche Dauer t_{ab,n} berechnet, für die die Schaltventile SVn jeweils geöffnet bleiben müssen, damit der Druck in den jeweiligen Radbremsen RBn auf den jeweiligen Soll-Druck p_{soll,n} abgebaut wird und die Schaltventile RBn nur für die jeweils berechnete Dauer t_{ab,n} öffnet, insbesondere ein Schaltventil (SVm) erst zu einem Zeitpunkt geöffnet wird, bei dem der Druck im zugehörigen Bremskreis gleich oder höher als der Ist-Druck (p_{ist,n}) in der Radbremse (RBm) ist, insbesondere gleichzeitig oder zeitlich überlappend zum Druckabbau in den Radbremsen RBm und RBn über den bzw. die Bremskreise in mindestens einer weiteren Radbremse RBi ein Druckabbau über Öffnen des zugehörigen Auslassventils erfolgt.

9. Bremsanlage nach einem der vorhergehenden Ansprüche, **dadurch gekennzeichnet, dass** die Steuerungseinrichtung einen Speicher aufweist, in dem der in jeder Radbremse (RB1, RB2, RB3, RB4) eingestellte Ist-Radbremsdruck (p_{RBist,i}) abgelegt und/oder in einem Regelmodell die wahrscheinlichen Bremsdrücke (p'_{RBist,i}) jeder Radbremse (RB1, RB2, RB3, RB4) fortwährend berechnet und mit gemessenen Werten aktualisiert werden, wobei die Steuereinrichtung zum gleichzeitigen Druckaufbau in mindestens zwei Radbremsen, insbesondere eines Bremskreises, auf unterschiedliche Solldrücke in den Radbremsen die Druck-Volumen-Kennlinie jeder der beteiligten Radbremse (RB1-4) auswertet und anhand des zu erzeugenden höchsten Soll-drucks den hierfür benötigten Kolbenweg (ds) des Kolbens (3) berechnet und den Kolben (3) um den Kolbenweg (ds) mittels des Antriebes (M, 2) verstellt, wobei dabei das Schaltventil SVm der Radbremse RBm, deren Soll-druck P_{soll,m} am höchsten ist, solange geöffnet bleibt, bis sich der Soll-Druck p_{soll,m} in dieser Radbremse RBm eingestellt hat, und dass die Steuerungseinrichtung für die Schaltventile SVn der übrigen Radbremsen RBn einzeln die zeitliche Dauer t_{auf,n} berechnet, für die die Schaltventile SVn jeweils geöffnet bleiben müssen, damit der Druck in den jeweiligen Radbremsen RBn auf den jeweiligen Soll-Druck p_{soll,n} aufgebaut wird und die Schaltventile RBn nur für die jeweils berechnete Dauer t_{auf,n} öffnet, insbesondere ein Schaltventil SVm erst zu einem Zeitpunkt geöffnet wird, bei dem der Druck im zugehörigen Bremskreis gleich oder geringer als der Ist-Druck p_{ist,m} in der Radbremse RBm ist, insbesondere gleichzeitig oder zeitlich überlappend zum Druckaufbau in den Radbremsen RBm und RBn über den bzw. die Bremskreis(e) in mindestens einer weiteren Radbremse ein Druckabbau über Öffnen des zugehörigen Auslassventils erfolgt.

10. Bremsanlage nach einem der vorhergehenden Ansprüche, **dadurch gekennzeichnet, dass** die Druckversorgereinheit (DE) ein Kolben-Zylinder-System (2, 3, 4, 4a) ist, dessen einer Kolben (3) mittels eines Elektromotors (M) angetrieben ist und mindestens einen Arbeitsraum (4, 4a) begrenzt, insbesondere der Kolben (3) der Druckversorgereinheit (DE) einen ersten und einen zweiten Arbeitsraum (4, 4a) voneinander abdichtend trennt, wobei sowohl der erste als auch der zweite Arbeitsraum (4, 4a) durch entsprechende Ansteuerung von Trennventilen (TV1, TV2, TV2b) zum gleichzeitigen und/oder zeitlich versetzten Druckauf- und zum Druckabbau in den Radbremsen (RB1, RB2, RB3, RB4) der beiden Bremskreise (BK1, BK2) nutzbar ist.

11. Bremsanlage nach einem der vorhergehenden Ansprüche, **dadurch gekennzeichnet, dass** zum Druckaufbau- und/oder Druckabbau in mindestens einer Radbremse die Steuerungseinrichtung die Druck-Volumen-Kennlinie jeder Radbremse (RB1-4) auswertet und anhand des zu erzeugenden Druckanstieges bzw. Druckabfalls den hierfür benötigten Kolbenweg (ds) des Kolbens (3) berechnet und den Kolben (3) unter entsprechender Ansteuerung der benötigten Ventile um den Kolbenweg (ds) mittels des Antriebes (M, 2) verstellt.

12. Bremsanlage nach einem der vorhergehenden Ansprüche, **dadurch gekennzeichnet, dass** die Steuerungseinrichtung den Druck in einem Bremskreis mittels eines Drucksensors und den Druck in dem anderen Bremskreis über den Phasenstrom des Antriebsmotors bestimmt, und den ermittelten bzw. berechneten Bremskreisdruck bei der Steuerung des Druckaufbaus bzw. Druckabbaus in den Radbremsen, insbesondere bei der Berechnung des erforderlichen Kolbenhubs (ds) des Kolbens (3) unter Berücksichtigung der Druck-Volumen-Kennlinie(n) der beteiligten Radbremsen sowie der notwendigen Öffnungszeit(en) t_{auf,n} bzw. t_{ab,n}, berücksichtig.

13. Bremsanlage nach einem der vorhergehenden Ansprüche, **dadurch gekennzeichnet, dass** der Innenraum bzw. Ankerraum (Ei) des Einlassventils (EV) über eine Hydraulikleitung mit dem zugehörigen Aktor/ Bremskreis (BK) und der Ventilsitzausgang (Ea) über eine Hydraulikleitung mit der zugehörigen Radbremse (RB) verbunden ist

14. Bremsanlage nach einem der vorhergehenden Ansprüche, **dadurch gekennzeichnet, dass** der Arbeitsraum (4a) der Druckversorgungseinheit (DE) über eine hydraulische Verbindung (VD) mit dem Druckmittelvorratsbehältnis (10) verbunden ist, wobei ein schaltbares Ventil (PD1) zur Absperrung der hydraulische Verbindung (VD) dient, derart, dass ein Druckabbau in mindestens einer Radbremse (RBi) durch Öffnen des zugehörigen Schaltventils (SVi) und durch Öffnen des Ventils (PD1) zeitgesteuert erfolgen kann, wobei die vorabbestimmte Öffnungszeit (t_{ab,i}) den einzustellenden Radbremsendruck bestimmt, insbesondere über den anderen Druckraum (4) mittels der Druckversorgungseinheit (DE) ein volumengesteuerter Druckab- oder Druckaufbau in mindestens einer Radbremse des anderen Bremskreises bei gleichzeitig geöffneten Schaltventilen der jeweiligen Radbremsen erfolgt.

15. Bremsanlage nach einem der vorhergehenden Ansprüche, **dadurch gekennzeichnet, dass**
- der eine Druckraum (4) der Druckversorgungseinheit (DE) über eine hydraulische Verbindung (VL3) mit dem Arbeitsraum (A1) der ersten Kolben-Zylinder-Einheit (HZE) in Verbindung ist, wobei die hydraulische Verbindung (VL3) mittels des Verstellens des Kolbens (SK) der ersten Kolben-Zylinder-Einheit (HZE) in eine Absperrposition, welche insbesondere in der Rückfallebene vom Kolben (SK) automatisch eingenommen wird, absperrbar ist
und/oder
- die Steuerungseinrichtung beim Druckauf- und/oder beim Druckabbau die Absolutposition des Kolbens (3) berücksichtigt und in Abhängigkeit des bzw. der Ist-Drücke, der Soll-Drücke und der Druck-VolumenKennlinie der jeweils am Druckauf- bzw. Druckabbau beteiligten Radbremsen den notwendigen Verstellweg (ds) des Kolbens (3) bestimmt und/oder
- im Normalbetrieb mit geringen Dynamikanforderungen und hoher Druckstellpräzisionsanforderung, insbesondere bei normaler Bremskraftverstärkung, Rekuperation, ABS auf Low-µ, in allen Radbremsen der Druck über die Wegsteuerung (ds) des Kolbens (3) der Druckversorgungseinheit (DE) unter Berücksichtigung der jeweiligen Druck-Volumen-Kennlinien simultan oder sequentiell auf- und abgebaut wird, und dass in Betriebssituationen mit hohen Dynamikanforderungen, insbesondere bei ABS bei High-µ, µ-Split, ESP und ASR, der Druck in mindestens einer Radbremse über das zugeordnete Auslassventil (AV1, AV3) und/oder über Auslassventile (PD1) der Druckversorgereinheit (DE) zeitgleich Druck abgebaut wird.

16. Bremsanlage nach einem der vorhergehenden Ansprüche, **dadurch gekennzeichnet, dass**
- mittels der Betätigungseinrichtung (BP) bei Ausfall der Druckerzeugungseinrichtung (DE) oder einem anderen Fehlerfall, insbesondere in der Rückfallebene, der mindestens eine Kolben (SK, HIKO) der ersten Kolben-Zylinder-Einrichtung (HZE) zum Druckaufbau in mindestens einer Radbremse verstellbar ist
und/oder
- der Druckabbau über den weggesteuerten Hub des Kolbens (8) der Druckversorgereinrichtung (DE) oder über die Verbindungsleitung einer Druckkammer (DHK1, DHK2) des Doppelhubkolbens (8) mit geöffnetem Ventil (PD1, PD3) in das Vorratsbehälter (6) erfolgt, wobei die Steuerungseinrichtung den im jeweiligen Bremskreis gemessenen Druck oder berechneten Druck zur Druckabbausteuerung verwendet und/oder
- der Druckabbau bei hohen Drücken bis zu Drücken in Bereich nahe des Blockierdrucks im Normalbetrieb (200bar->ca. 80-100 bar) über Druck oder Zeitsteuerung des PD3-Ventil bei optional gleichzeitig oder zeitlich versetzten Wegsteuerung des Doppelhubkolbens im Vorhubbetrieb und nachfolgenden Druckabbau bis zum Atmosphärendruck über Druckvolumensteuerung im Rückhubbetrieb des Doppelhubkolbens.

17. Bremsanlage nach einem der vorhergehenden Ansprüche, **dadurch gekennzeichnet, dass** die Trennventile (TV1, TV2, TV2b) auf hohe Durchflüsse und geringe Differenzdrücke ausgelegt sind, insbesondere die Steuerungseinheit mittels der Druckversorgereinrichtung (DE) vor oder während dem Öffnen eines Trennventils (TV1, TV2, TV2b) einen Druck im entsprechenden Druckraum (4, 4a) mittels Verstellen des Kolbens (3) erzeugt, der so groß ist, dass sich an dem zu öffnenden Trennventil (TV1, TV2, TV2b) ein hinreichend kleiner Differenzdruck einstellt.

18. Verfahren zum Testen der Dichtheit und Beweglichkeit des Schwimmkolbens (SK) eines Hauptbremszylinders (HZE) einer Bremsanlage nach einem der vorhergehenden Ansprüche, wobei der Hauptbremszylinder (HZE) einen radial verlaufenden Kanal (SL) in seiner Zylinderwand aufweist, welcher im ersten Druckraum (DR1) mündet, wobei die Mündungsöffnung des Kanals (SL) vom Schwimmkolben (SK) verschlossen ist, sobald dieser um den Durchmesser der Mündungsöffnung aus seiner Normalstellung heraus verstellt ist, wobei der Kanal (SL) hydraulisch mit einem Druckraum (9) der Druckversorgereinrichtung (DE) in Verbindung ist, wobei ein mechanischer Anschlag (3) im Hauptbremszylinder (HZE) angeordnet ist und eine Feder (4) den Schwimmkolben (SK) in Richtung des Anschlags (3) kraftbeaufschlagt, wobei sich der Schwimmkolben (SK) in seiner Normalstellung befindet, wenn er an dem Anschlag (3) anliegt, **dadurch gekennzeichnet, dass** das Verfahren die folgenden Verfahrensschritte aufweist:
a. Dass über die Druckerzeugereinheit (DE) ein Druck in der Druckkammer (DR2, DR1) aufgebaut wird und Ventile derart geschalten werden, dass der Druck in der zweiten Druckkammer (DR2) grösser ist als in der ersten Druckkammer (DR1), derart, dass sich der Schwimmkolben (SK) bewegt und die Verbindungsleitung (SL) zur Druckversorgereinheit (DE) schließt, insbesondere bei geöffneten Ventilen (SV1, SV2) im Bremskreis (BKI) und geschlossenen Ventilen (SV3, SV4) im Bremskreis (BKII);
b. Mittels der Druckerzeugereinheit (DE) wird ein Test-Wegprofil des Schwimmkolbens (SK) und/oder ein zeitlicher Druckvolumenverlauf in einem der Druckräume des Hauptbremszylinders (HZE) erzeugt;
c. Anhand des Signals eines Druckgebers wird der sich einstellende Druckverlauf, insbesondere Druckanstieg, mit dem Sollwertwertverlauf bei geöffneten Ventilen (SV1-SV4) verglichen und ausgewertet.

19. Verfahren zum Testen der Dichtheit und Beweglichkeit des Schwimmkolbens (SK) eines Hauptbremszylinders (HZE) nach Anspruch 18, **dadurch gekennzeichnet, dass** das Verfahren die folgenden Verfahrensschritte aufweist:
a) Speichern des Drucks im Bremskreis (BKII) durch Schließen der Ventile (SV3, SV4) während eines Parkstop (PSC) bei Fahrzeugstillstand;
b) anschließende Reduzierung des Drucks im Bremskreis (BK I) mittels der Druckversorgereinheit (DE) auf 0 bis 1 bar;
c) anschließendes blockieren der Druckversorgereinheit (DE), derart, dass keine Kolbenbewegung des Kolbens (8) der Druckversorgereinheit (DE) mehr erfolgt, wobei die Steuerungseinrichtung das Trennventil (TV2) schließt;
d) Anschließend werden die Ventile (SV3, SV4) geöffnet, wodurch sich der Schwimmkolbens (SK) aufgrund des Druck auf seiner Rückseite bewegt und somit den Druck im Bremskreis (BK I) aufbaut, bis sich ein Druckgleichgewicht zwischen den beiden Bremskreisen einstellt;
e) Messung des Drucks mittels eines Drucksensors in einem der Bremskreise und auswerten des Druckverlaufs.

## Claims

1. Brake system for motor vehicles, with
- an actuation device (BP), in particular in the form of a brake pedal,
- a travel simulator (WS) to generate a feedback force on the actuation device (BP),
- a first piston-cylinder device (HZE), wherein the piston-cylinder device (HZE) has at least one piston (SK) and at least one working chamber (A₁, A₂) is connected via at least one hydraulic connecting line (VL₁, VL₂) to at least one wheel brake (RB₁₋₄) of a brake circuit (BK1, BK2),
- a control device,
wherein at least one wheel brake (RB1, RB2, RB3, RB4) is assigned to each brake circuit (BK1, BK2) and each wheel brake (RB1, RB2, RB3, RB4) can be connected to its assigned connecting line (VL₁, VL₂) via an assigned controllable switching valve (SV1, SV2, SV3, SV4),
wherein the controllable switching valve (SV1, SV2, SV3, SV4) is opened unpowered,
and at least one pressure supply unit (DE) driven by an electric motor and having a double-stroke piston (3), a first working chamber (4) and a second working chamber (4a), wherein by means of the pressure supply unit (DE) the brake pressure can be reduced optionally in one or more wheel brakes (RB1, RB2, RB3, RB4) simultaneously,
wherein the first working chamber (4) is connectable via a first controllable switching valve (PD3) with a storage container (10) and the second working chamber (4a) is connectable via a second controllable switching valve (PD1) with the storage container (10),
**characterized in that**
the wheel brake pressure is reducible via establishing a hydraulic connection of one of the working chambers (4, 4a) of the pressure supply unit (DE), in particular the double-stroke piston (3), with the storage container (10) by opening the respective controllable switching valve (PD1, PD3) as follows:
a) in at least one or more wheel brakes (RB1, RB2, RB3, RB4) the controlled pressure reduction takes place via the controllable switching valve (SV1, SV2) assigned to the respective wheel brake (RB1, RB2) via a pressure volume control by means of a return stroke of the double-stroke piston (3) into the storage container (10) and/or,
b) in at least one or more wheel brakes (RB1, RB2, RB3, RB4), the controlled pressure reduction takes place via the controllable switching valve (SV1, SV2) assigned to the respective wheel brake (RB1, RB2) via a pressure volume control by means of a forward stroke of the double-stroke piston (3) into the storage container (10).

2. Brake system according to claim 1, **characterized in that** either an outlet valve (AV1, AV3) is assigned to only one wheel brake (RB1, RB3) or an outlet valve (AV1, AV3) is assigned to only one wheel brake (RB1, RB3) of each brake circuit (BK1, BK2), the outlet valve (AV1, AV3) being arranged in a hydraulic connection between the wheel brake and the pressure medium storage container (10), no further valve being arranged between the outlet valve (AV1, AV3) and the pressure medium storage container (10).

3. Brake system according to claim 1 or 2, **characterised in that** an outlet valve (AV1, AV3) is assigned to a front wheel brake (RB1, RB2, RB3, RB4)
and/or
at least one pressure sensor (9) serves to determine the pressure in at least one brake circuit (BK1, BK2)
and/or the switching valves (SV1, SV2, SV3, SV4) are digital valves and are opened unpowered.

4. Brake system according to one of claims 1 to 3, **characterised in that**
- the pressure supply unit (DE) has only one working chamber (4), wherein the working chamber (4) is connected by means of two further hydraulic connecting lines (VL3, VL4) to both brake circuits (BK1, BK2), in particular to their connecting lines (VL1, VL2) or the associated working chamber (A1), wherein for shut-off and optional opening of at least one of the two further connecting lines (VL3, VL4), an isolating valve (TV1, TV2) is arranged therein and/or
- the control device has a memory which contains the actual wheel brake pressure (p_{RBist,i}) set in each wheel brake (RB1, RB2, RB3, RB4), wherein by means of the stored actual wheel brake pressure (p_{RBist,i}) and the nominal wheel brake pressure (P_{RBsoll,i}), the control unit determines, in particular taking into account the pressure-volume curve of the wheel brake(s), the time (t_{ab}) for which the outlet valve (AV1, AV3) must be opened in order to reach the nominal wheel brake pressure (p_{RBsoll,i}) in the wheel brake or wheel brakes, and that the control device closes the outlet valve (AV1, AV3) after expiry of the time (t_{ab}).

5. Brake system according to claim 4, **characterised in that** the control device reduces the brake pressure in the wheel brake (RB1, RB3), to which an outlet valve (AV1, AV3) is assigned, via the outlet valve (AV1, AV3) which is opened for a precalculated time (t_{ab}), into the storage container (10), wherein for simultaneous pressure reduction (p_{ab}) or pressure build-up (p_{auf}) in the other wheel brake (RB2, RB4) of the same brake circuit (BK1, BK2) and/or at least one further wheel brake (RB1, RB2, RB3, RB4) of the other brake circuit (BK1, BK2), the control device opens the respective assigned switching valve(s) (SV1, SV2, SV3, SV4) and sets or regulates the nominal brake pressure in this wheel brake by means of corresponding activation of the pressure supply unit (DE).

6. Brake system according to any one of the preceding claims, **characterised in that** the outlet valve (AV1, AV3) assigned to one of the wheel brakes (RB1, RB3) of a brake circuit (BK1, BK2) serves for pressure reduction (p_{ab}) in both wheel brakes (RB1, RB2 or RB3, RB4), wherein for common pressure reduction (p_{ab}), the control device opens both switching valves (SV1, SV2 or SV3, SV4) and the respective outlet valve (AV1 or AV3), in particular during opening of the two switching valves (SV1, SV2 or SV3, SV4), the control device separates the brake circuit (BK1 or BK2) from the pressure supply unit (DE) by closing the associated isolating valve (TV1 or TV2) or by locking the piston (SK) of the first piston cylinder system (HZE).

7. Brake system according to any one of the preceding claims, **characterised in that** for simultaneous or temporally offset pressure reduction and/or pressure build-up, the control unit
- sets, by means of the pressure supply unit (DE), a pressure in its at least one pressure chamber (4, 4a) and opens and/or closes the switching valves (SV1, SV2, SV3, SV4) simultaneously and/or with temporal offset in order to set the nominal pressure required in the respective wheel brakes, wherein by means of the at least one outlet valve (AV1, AV3), pressure is reduced in the wheel brake or brakes (RB1, RB3) assigned to the outlet valve independently of the supply unit (DE) and/or
- actuates the pressure supply unit (DE) taking into account the wheel brake pressures calculated or prevailing in the wheel brakes (RB1, RB2, RB3, RB4), wherein the pressure supply unit (DE) generates the nominal pressure to be set for the respective wheel brake(s) with open switching valve(s) (SV1, SV2, SV3, SV4), and after reaching the nominal pressure, the control device closes the switching valve(s) (SV1, SV2, SV3, SV4) to maintain the nominal pressure in the wheel brake(s), wherein by means of the at least one outlet valve (AV1, AV3), pressure can be reduced in the wheel brake (RB1, RB3) assigned to the outlet valve independently of the pressure-generating unit (DE).

8. Brake system according to any one of the preceding claims, **characterised in that** the control device has a memory which stores the actual wheel brake pressure (p_{RBist,i}) set in each wheel brake (RB1, RB2, RB3, RB4) and/or continuously calculates in a control model the probable brake pressures (p'_{RBist,i}) of each wheel brake (RB1, RB2, RB3, RB4) and updates these with measured values, wherein for simultaneous pressure reduction in at least two wheel brakes, in particular of one brake circuit, to different nominal pressures in the wheel brakes, the control unit evaluates the pressure-volume curve of each of the wheel brakes (RB1-4) concerned and using the lowest nominal pressure to be generated calculates the piston travel (ds) of the piston (3) required for this and moves the piston (3) by the piston travel (ds) by means of the drive (M, 2), wherein the switching valve (SVm) of the wheel brake (RBm) with the lowest nominal pressure (P_{soll,m}) remains open until the nominal pressure (p_{soll,m}) has been set in the wheel brake (RBm); and that for the switching valves (SVn) of the other wheel brakes (RBn), the control device calculates individually the temporal duration (t_{ab,n}) for which the switching valves (SVn) must remain open so that the pressure in the respective wheel brakes (RBn) is reduced to the respective nominal pressure (p_{soll,n}), and opens the switching valves (RBn) only for the respective calculated duration (t_{ab,n}), in particular
a switching valve (SVm) is opened first at a time at which the pressure in the associated brake circuit is equal to or higher than the actual pressure (p_{ist,n}) in the wheel brake (RBm), in particular
at the same time as or temporally overlapping the pressure reduction in the wheel brakes (RBm) and (RBn) over the brake circuit(s), the pressure is reduced in at least one further wheel brake (RBi) by opening of the associated outlet valve.

9. Brake system according to any one of the preceding claims, **characterised in that** the control device has a memory which stores the actual brake pressure (p_{RBist,i}) set in each wheel brake (RB1, RB2, RB3, RB4) and/or continuously calculates in a control model the probable brake pressures (p'_{RBist,i}) of each wheel brake (RB1, RB2, RB3, RB4) and updates these with measured values, wherein for simultaneous pressure build-up in at least two wheel brakes, in particular of one brake circuit, to different nominal pressures in the wheel brakes, the control unit evaluates the pressure-volume curve of each of the wheel brakes (RB1-4) concerned and using the highest nominal pressure to be generated calculates the piston travel (ds) of the piston (3) required for this and moves the piston (3) by the piston travel (ds) by means of the drive (M, 2), wherein the switching valve (SVm) of the wheel brake (RBm) with the highest nominal pressure (P_{soll,m}) remains open until the nominal pressure (p_{soll,m}) has been set in the wheel brake (RBm); and that for the switching valves (SVn) of the other wheel brakes (RBn), the control device calculates individually the temporal duration (t_{auf,n}) for which the switching valves (SVn) must remain open so that the pressure in the respective wheel brakes (RBn) is built up to the respective nominal pressure (p_{soll,n}), and opens the switching valves (RBn) only for the respective calculated duration (t_{auf,n}), in particular
a switching valve (SVm) is opened first at a time at which the pressure in the associated brake circuit is equal to or lower than the actual pressure (p_{ist,n}) in the wheel brake (RBm), in particular
at the same time as or temporally overlapping the pressure build-up in the wheel brakes (RBm) and (RBn) over the brake circuit(s), the pressure is reduced in at least one further wheel brake (RBi) by opening of the associated outlet valve.

10. Brake system according to any one of the preceding claims, **characterised in that** the pressure supply unit (DE) is a piston-cylinder system (2, 3, 4, 4a), the one piston (3) of which is driven by an electric motor (M) and delimits at least one working chamber (4, 4a), in particular
the piston (3) of the pressure supply unit (DE) separates a first and a second working chamber (4, 4a) tightly from each other, wherein both the first and the second working chamber (4, 4a) can, by corresponding actuation of isolating valves (TV1, TV2, TV2b), be used for simultaneous and/or temporally offset pressure build-up and pressure reduction in the wheel brakes (RB1, RB2, RB3, RB4) of the two brake circuits (BK1, BK2).

11. Brake system according to any one of the preceding claims, **characterised in that** for pressure build-up and/or pressure reduction in at least one wheel brake, the control device evaluates the pressure-volume curve of each wheel brake (RB1-4) and from the pressure rise or fall to be generated, calculates the piston travel (ds) of the piston (3) required for this and by corresponding actuation of the required valves, moves the piston (3) by the piston travel (ds) by means of the drive (M, 2).

12. Brake system according to any one of the preceding claims, **characterised in that** the control device determines the pressure in one brake circuit by means of a pressure sensor, and determines the pressure in the other brake circuit via the phase current of the drive motor, and takes account of the determined or calculated brake circuit pressure in the control of the pressure build-up or pressure reduction in the wheel brakes, in particular in the calculation of the required piston stroke (ds) of the piston (3) taking into account the pressure-volume curve(s) of the wheel brakes concerned and the necessary opening time(s) (t_{auf,n}) or (t_{ab,n}).

13. Brake system according to any one of the preceding claims, **characterised in that** the interior or armature housing (Ei) of the inlet valve (EV) is connected via a hydraulic line to the associated actuator/brake circuit (BK), and the valve seat outlet (Ea) is connected via a hydraulic line to the associated wheel brake (RB).

14. Brake system according to any one of the preceding claims, **characterised in that** the working chamber (4a) of the pressure supply unit (DE) is connected via a hydraulic connection (VD) to the pressure medium storage container (10), wherein a switchable valve (PD1) serves to shut off the hydraulic connection (VD) such that a pressure reduction in at least one wheel brake (RBi) can take place time-controlled by opening the associated switching valve (SVi) and by opening the valve (PD1), wherein the predefined opening time (t_{ab,i}) determines the wheel brake pressure to be set, in particular
via the other pressure chamber (4), by means of the pressure supply unit (DE), a volume-controlled pressure reduction or pressure build-up takes place in at least one wheel brake of the other brake circuit when the switching valves of the respective wheel brakes are open simultaneously.

15. Brake system according to any one of the preceding claims, **characterised in that**
- the one pressure chamber (4) of the pressure supply unit (DE) is connected via a hydraulic connection (VL3) to the working chamber (A1) of the first piston-cylinder unit (HZE), wherein the hydraulic connection (VL3) can be shut off by movement of the piston (SK) of the first piston-cylinder unit (HZE) into a shut-off position which is assumed automatically, in particular in the fall-back level of the piston (SK) and/or
- on pressure build-up and/or on pressure reduction, the control device takes into account the absolute position of the piston (3) and determines the necessary movement travel (ds) of the piston (3) depending on the actual pressure or actual pressures, nominal pressures and pressure-volume curve of the respective wheel brakes involved in the pressure build-up or reduction
and/or
- in normal operation with low dynamic requirements and high pressure setting precision requirement, in particular with normal brake force amplification, recuperation, ABS at low µ, the pressure is built up and reduced simultaneously or sequentially in all wheel brakes via the travel control (ds) of the piston (3) of the pressure supply unit (DE) taking into account the respective pressure-volume curves, and that in operating situations with high dynamic requirements, in particular ABS at high µ, µ split, ESP and ASR, the pressure in at least one wheel brake is reduced via the assigned outlet valve (AV1, AV3) and/or via outlet valves (PD1) of the pressure supply unit (DE) at the same time.

16. Brake system according to any one of the preceding claims, **characterised in that**
- by means of the actuation device (BP), on failure of the pressure generating device (DE) or on another fault, in particular in the fall-back level, the at least one piston (SK, HIKO) of the first piston-cylinder device (HZE) can be set to build up the pressure in at least one wheel brake and/or
- the pressure reduction takes place via the travel-controlled stroke of the piston (8) of the pressure supply device (DE) or via the connecting line of a pressure chamber (DHK1, DHK2) of the double-stroke piston (8) with open valve (PD1, PD3) into the storage container (6), wherein the control device uses the pressure measured in the respective brake circuit or the pressure calculated to control the pressure reduction
and/or
- the pressure reduction takes place at high pressures down to pressures in the range close to the blocking pressure in normal operation (200 bar -> approx. 80-100 bar) via pressure or time control of the PD3 valve with optionally simultaneously or temporally offset travel control of the double-stroke piston in advance stroke mode and subsequent pressure reduction to atmospheric pressure by pressure-volume control in return stroke mode of the double-stroke piston.

17. Brake system according to any one of the preceding claims, **characterised in that** the isolating valves (TV1, TV2, TV2b) are designed for high throughflow and low differential pressures, in particular **characterised in that**, by means of the pressure supply device (DE) before or during opening of an isolating valve (TV1, TV2, TV2b), the control unit sets a pressure in the corresponding pressure chamber (4, 4a) by a movement of the piston (3) which is so great that a sufficiently small differential pressure is created at the isolating valve (TV1, TV2, TV2b) to be opened.

18. Method for testing the tightness and movability of a floating piston (SK) of a master brake cylinder (HZE) of a brake system according to any one of the preceding claims, wherein the master brake cylinder (HZE) has a radially running channel (SL) in its cylinder wall which opens into the first pressure chamber (DR1), wherein the mouth opening of the channel (SL) is closed by the floating piston (SK) as soon as this has been moved out of its normal position by the diameter of the mouth opening, wherein the channel (SL) is hydraulically connected to a pressure chamber (9) of the pressure supply device (DE), wherein a mechanical stop (3) is arranged in the master brake cylinder (HZE) and a spring (4) force-loads the floating piston (SK) in the direction of the stop (3), wherein the floating piston (SK) is in its normal position when it lies on the stop (3), **characterised in that** the method comprises the following method steps:
a. via the pressure-generating unit (DE), a pressure is built up in the pressure chamber (DR2, DR1) and valves are switched such that the pressure in the second pressure chamber (DR2) is greater than in the first pressure chamber (DR1), such that the floating piston (SK) moves and closes the connecting line (SL) to the pressure supply unit (DE), in particular with open valves (SV1, SV2) in the brake circuit (BKI) and closed valves (SV3, SV4) in the brake circuit (BKII);
b. by means of the pressure-generating unit (DE), a test travel profile of the floating piston (SK) and/or a temporal pressure-volume curve in one of the pressure chambers of the master brake cylinder (HZE) is produced;
c. using the signal from a pressure sensor, the pressure curve created, in particular the pressure rise, is compared to the nominal value curve with open valves (SV1-SV4), and evaluated.

19. Method for testing the tightness and movability of the floating piston (SK) of a master brake cylinder (HZE) of a brake system according to Claim 18, **characterised in that** the method comprises the following method steps:
a) storage of the pressure in the brake circuit (BKII) by closure of the valves (SV3, SV4) during a parking stop (PSC) with the vehicle stationary;
b) subsequent reduction of the pressure in the brake circuit (BK I) by means of the pressure supply unit (DE) to 0 to 1 bar;
c) subsequent blocking of the pressure supply unit (DE), such that no further piston movement of the piston (8) of the pressure supply unit (DE) takes place, wherein the control device closes the isolating valve (TV2);
d) then the valves (SV3, SV4) are opened, whereby because of the pressure on its back side, the floating piston (SK) moves and thus builds up the pressure in the brake circuit (BK I) until a pressure equilibrium exists between the two brake circuits;
e) measurement of the pressure by means of a pressure sensor in one of the brake circuits, and evaluation of the pressure curve.

## Revendications

1. Système de freinage pour véhicules automobiles, comprenant
- un dispositif d'actionnement (BP), en particulier sous forme d'une pédale de freinage,
- un simulateur de course (WS) servant à générer une force de rétroaction sur le dispositif d'actionnement (BP),
- un premier dispositif de vérin à piston (HZE), sachant que le dispositif de vérin à piston (HZE) présente au moins un piston (DK), et au moins un compartiment de travail (A₁, A₂) est en liaison avec au moins un frein de roue (RB₁₋₄) d'un circuit de freinage (BK1, BK2) via au moins une conduite de liaison hydraulique (VL₁, VL₂),
- un dispositif de commande,
sachant qu'au moins un frein de roue (RB1, RB2, RB3, RB4) est associé à chaque circuit de freinage (BK1, BK2), et chaque frein de roue (RB1, RB2, RB3, RB4) peut être relié à la conduite de liaison (VL₁, VL₂) qui lui est associée via respectivement une soupape de commutation (SV1, SV2, SV3, SV4) commandable qui lui est associée,
sachant que la soupape de commutation (SV1, SV2, SV3, SV4) commandable est ouverte sans courant,
et au moins une unité d'alimentation en pression (DE) entraînée par voie électromotrice, qui présente un piston à double effet (3), une première chambre de travail (4) et une deuxième chambre de travail (4a), sachant que la pression de freinage peut être diminuée moyennant l'unité d'alimentation en pression (DE) sélectivement dans un ou plusieurs freins de roue (RB1, RB2, RB3, RB4) simultanément,
sachant que la première chambre de travail (4), via une première soupape (PD3) commutable, et la deuxième chambre (4a), via une deuxième soupape (PD1) commutable, peuvent être reliées à un réservoir de stockage (10),
**caractérisé en ce que**
la pression de freinage peut être diminuée moyennant un établissement d'une liaison hydraulique d'une des chambres de travail (4, 4a) de l'unité d'alimentation en pression (DE), en particulier du piston à double effet (3), avec le réservoir de stockage (10) par ouverture de la soupape (PD1, PD3) commutable respective comme suit :
a) dans au moins un ou plusieurs freins de roue (RB1, RB2, RB3, RB4), la diminution contrôlée de pression s'effectue via la soupape de commutation (SV1, SV2) commandable associée au frein de roue (RB1, RB2) respectif via une commande de pression-volume moyennant une avance du piston à double effet (3) vers le réservoir de stockage (10) et/ou
b) dans au moins un ou plusieurs freins de roue (RB1, RB2, RB3, RB4), la diminution contrôlée de pression s'effectue via la soupape de commutation (SV1, SV2) commandable associée au frein de roue (RB1, RB2) respectif via une commande de pression-volume moyennant un recul du piston à double effet (3) vers le réservoir de stockage (10).

2. Système de freinage selon la revendication 1, **caractérisé en ce que** soit une soupape de sortie (AV1, AV3) n'est associée qu'à un seul frein de roue (RB1, RB3), soit une soupape de sortie (AV1, AV3) n'est associée qu'à respectivement un frein de roue (RB1, RB3) de chaque circuit de freinage (BK1, BK2), sachant que la soupape de sortie (AV1, AV3) est disposée dans une liaison hydraulique entre le frein de roue et le réservoir de stockage de fluide à pression (10), sachant qu'aucune soupape supplémentaire n'est disposée entre la soupape de sortie (AV1, AV3) et le réservoir de stockage de fluide à pression (10).

3. Système de freinage selon la revendication 1 ou 2, **caractérisé en ce qu'**une soupape de sortie (AV1, AV3) est associée à un frein de roue avant (RB1, RB2, RB3, RB4)
et/ou
au moins un capteur de pression (9) sert à déterminer la pression dans au moins un circuit de freinage (BK1, BK2)
et/ou les soupapes de commutation (SV1, SV2, SV3, SV4) sont des soupapes numériques et sont ouvertes sans courant.

4. Système de freinage selon l'une des revendications 1 à 3, **caractérisé en ce que**
- l'unité d'alimentation en pression (DE) ne présente qu'un compartiment de travail (4), sachant que le compartiment de travail (4) est en liaison avec les deux circuits de freinage (BK1, BK2), en particulier avec leurs conduites de liaison (VL1, VL2) ou le compartiment de travail (A1) afférent, moyennant deux conduites de liaison (VL3, VL4) hydrauliques supplémentaires, sachant que pour l'arrêt et l'ouverture sélective d'au moins une des deux conduites de liaison (VL3, VL4) supplémentaires, une soupape d'isolement (TV1, TV2) est disposée dans celle-ci
et/ou
- le dispositif de commande présente une mémoire dans laquelle la pression effective de frein de roue (p_{RBist,i}) réglée dans chaque frein de roue (RB1, RB2, RB3, RB4) est mémorisée, sachant que le dispositif de commande détermine, à l'aide de la pression effective de frein de roue (p_{RBist,i}) enregistrée et de la pression de consigne de frein de roue (p_{RBsoll,i}), en particulier compte tenu de la courbe caractéristique de pression-volume du (des) frein(s) de roue, le temps (t_{ab}) pendant lequel la soupape de sortie (AV1, AV3) doit être ouverte pour que la pression de consigne de frein de roue (p_{RBsoll,i}) soit atteinte dans le ou les freins de roue, et **en ce que** le dispositif de commande ferme la soupape de sortie (AV1, AV3) après expiration du temps (t_{ab}).

5. Système de freinage selon la revendication 4, **caractérisé en ce que** le dispositif de commande diminue la pression de freinage dans le frein de roue (RB1, RB3) à laquelle est associée une soupape de sortie (AV1, AV3) via la soupape de sortie (AV1, AV3) ouverte pendant un temps (t_{ab}) calculé préalablement vers le réservoir de stockage (10), sachant que le dispositif de commande, pour la diminution de pression (p_{ab}) ou l'augmentation de pression (p_{auf}) simultanée dans l'autre frein de roue (RB2, RB4) du même circuit de freinage (BK1, BK2) et/ou d'au moins un frein de roue (RB1, RB2, RB3, RB4) supplémentaire de l'autre circuit de freinage (BK1, BK2), ouvre la ou les soupapes de commutation (SV1, SV2, SV3, SV4) associées respectives et règle ou régule la pression de freinage de consigne dans cette ou ces freins de roue par un pilotage correspondant de l'unité d'alimentation en pression (DE).

6. Système de freinage selon l'une des revendications précédentes, **caractérisé en ce que** l'une soupape de sortie (AV1, AV3) associée à un frein de roue (RB1, RB3) d'un circuit de freinage (BK1, BK2) sert à la diminution de pression (p_{ab}) dans les deux freins de roue (RB1, RB2 ou RB3, RB4), sachant que le dispositif de commande, pour la diminution de pression (p_{ab}) commune, ouvre les deux soupapes de commutation (SV1, SV2 ou SV3, SV4) ainsi que la soupape de sortie (AV1 ou AV3) respective, en particulier le dispositif de commande, pendant l'ouverture des deux soupapes de commutation (SV1, SV2 ou SV3, SV4), isole le circuit de freinage (BK1 ou BK2) de l'unité d'alimentation en pression (DE) par fermeture de la soupape d'isolement (TV1 ou TV2) afférente ou par blocage du piston (SK) du premier système de vérin à piston (HZE).

7. Système de freinage selon l'une des revendications précédentes, **caractérisé en ce que** le dispositif de commande, pour la diminution de pression simultanée ou décalée dans le temps et/ou pour l'augmentation de pression,
- règle, moyennant l'unité d'alimentation en pression (DE), une pression dans son au moins un compartiment de pression (4, 4a) et ouvre et/ou ferme les soupapes de commutation (SV1, SV2, SV3, SV4) simultanément ou de manière temporellement décalée pour régler la pression de consigne respectivement nécessaire dans les freins de roue, sachant que, moyennant l'au moins une soupape de sortie (AV1, AV3), une diminution de pression s'effectue dans le frein de roue ou les freins de roue (RB1, RB3) associés à la soupape de sortie indépendamment de l'unité d'alimentation en pression (DE)
et/ou
- pilote l'unité d'alimentation en pression (DE) compte tenu des pressions de frein de roue régnant dans les freins de roue (RB1, RB2, RB3, RB4) ou calculées, sachant que l'unité d'alimentation en pression (DE) génère la pression de consigne à régler pour le(s) frein(s) de roue respectif(s) lorsque la (les) soupape(s) de commutation (SV1, SV2, SV3, SV4) est (sont) ouverte(s) et, après atteinte de la pression de consigne, le dispositif de commande ferme la ou les soupapes de commutation (SV1, SV2, SV3, SV4) pour maintenir la pression de consigne dans le ou les freins de roue, sachant que, moyennant l'au moins une soupape de sortie (AV1, AV3), une diminution de pression peut s'effectuer dans le frein de roue (RB1, RB3) associé à la soupape de sortie indépendamment de l'unité d'alimentation en pression (DE).

8. Système de freinage selon l'une des revendications précédentes, **caractérisé en ce que** le dispositif de commande présente une mémoire dans laquelle la pression effective de frein de roue (p_{RBist,i}) réglée dans chaque frein de roue (RB1, RB2, RB3, RB4) est mémorisée et/ou les pressions de freinage (p'_{RBist,i}) probables de chaque frein de roue (RB1, RB2, RB3, Rb4) sont calculées en continu dans un modèle de régulation et actualisées avec des valeurs mesurées, sachant que le dispositif de commande, pour la diminution de pression simultanée dans au moins deux freins de roue, en particulier d'un circuit de freinage, à des pressions de consigne différentes dans les freins de roue, évalue la courbe caractéristique de pression-volume de chacun des freins de roue (RB1-4) impliqués et calcule, à l'aide de la pression de consigne la plus faible à générer, la course de piston (ds) nécessaire à cet effet du piston (3) et déplace le piston (3) à raison de la course de piston (ds) moyennant l'entraînement (M, 2), sachant qu'à cette occasion, la soupape de commutation SVm du frein de roue RBm dont la pression de consigne P_{soll,m} est la plus faible reste ouverte jusqu'à ce que la pression de consigne P_{soll,m} se soit établie dans le frein de roue RBm, et **en ce que** le dispositif de commande, pour les soupapes de commutation SVn des autres freins de roue RBn, calcule individuellement la durée temporelle t_{ab,n} pendant laquelle les soupapes de commutation SVn doivent respectivement rester ouvertes pour que la pression dans les freins de roue RBn respectifs soit diminuée à la pression de consigne p_{soll,n} respective et n'ouvre les soupapes de commutation RBn que pour la durée t_{ab,n} respectivement calculée, en particulier une soupape de commutation (SVm) ne s'ouvre qu'à un moment où la pression dans le circuit de freinage afférent est égale ou supérieure à la pression effective (p_{ist,n}) dans le frein de roue (RBm), en particulier simultanément ou en chevauchement temporel, pour la diminution de pression dans les freins de roue RBm et RBn via le ou les circuits de freinage dans au moins un frein de roue supplémentaire RBi, une diminution de pression s'effectue via l'ouverture de la soupape de sortie afférente.

9. Système de freinage selon l'une des revendications précédentes, **caractérisé en ce que** le dispositif de commande présente une mémoire dans laquelle la pression effective de frein de roue (p_{RBist,i}) réglée dans chaque frein de roue (RB1, RB2, RB3, RB4) est mémorisée et/ou les pressions de freinage (p'_{RBist,i}) probables de chaque frein de roue (RB1, RB2, RB3, Rb4) sont calculées en continu dans un modèle de régulation et actualisées avec des valeurs mesurées, sachant que le dispositif de commande, pour l'augmentation de pression simultanée dans au moins deux freins de roue, en particulier d'un circuit de freinage, à des pressions de consigne différentes dans les freins de roue, évalue la courbe caractéristique de pression-volume de chacun des freins de roue (RB1-4) impliqués et calcule, à l'aide de la pression de consigne la plus élevée à générer, la course de piston (ds) nécessaire à cet effet du piston (3) et déplace le piston (3) à raison de la course de piston (ds) moyennant l'entraînement (M, 2), sachant qu'à cette occasion, la soupape de commutation SVm du frein de roue RBm dont la pression de consigne P_{soll,m} est la plus élevée reste ouverte jusqu'à ce que la pression de consigne P_{soll,m} se soit établie dans ce frein de roue RBm, et **en ce que** le dispositif de commande, pour les soupapes de commutation SVn des autres freins de roue RBn, calcule individuellement la durée temporelle t_{auf,n} pendant laquelle les soupapes de commutation SVn doivent respectivement rester ouvertes pour que la pression dans les freins de roue RBn respectifs soit augmentée à la pression de consigne p_{soll,n} respective et n'ouvre les soupapes de commutation RBn que pour la durée t_{auf,n} respectivement calculée, en particulier une soupape de commutation SVm ne s'ouvre qu'à un moment où la pression dans le circuit de freinage afférent est égale ou inférieure à la pression effective (p_{ist,m}) dans le frein de roue RBm, en particulier simultanément ou en chevauchement temporel, pour l'augmentation de pression dans les freins de roue RBm et RBn via le ou les circuits de freinage dans au moins un frein de roue supplémentaire, une diminution de pression s'effectue via l'ouverture de la soupape de sortie afférente.

10. Système de freinage selon l'une des revendications précédentes, **caractérisé en ce que** l'unité d'alimentation en pression (DE) est un système de vérin à piston (2, 3, 4, 4a) dont le piston (3) est entraîné moyennant un électromoteur (M) et délimite au moins un compartiment de travail (4, 4a), en particulier le piston (3) de l'unité d'alimentation en pression (DE) isole de manière étanche un premier et un deuxième compartiment de travail (4, 4a) l'un de l'autre, sachant qu'à la fois le premier et le deuxième compartiment de travail (4, 4a) sont utilisables, par un pilotage correspondant de soupapes d'isolement (TV1, TV2, TV2b), pour l'augmentation et/ou la diminution de pression simultanée ou temporellement décalée dans les freins de roue (RB1, RB2, RB3, RB4) des deux circuits de freinage (BK1, BK2).

11. Système de freinage selon l'une des revendications précédentes, **caractérisé en ce que**, pour l'augmentation de pression et/ou la diminution de pression dans au moins un frein de roue, le dispositif de commande évalue la courbe caractéristique de pression-volume de chaque frein de roue (RB1-4) et calcule, à l'aide de la hausse de pression ou de la baisse de pression à générer, la course de piston (ds) nécessaire à cet effet du piston (3) et déplace le piston (3) à raison de la course de piston (ds) moyennant l'entraînement (M, 2) par un pilotage correspondant les soupapes requises.

12. Système de freinage selon l'une des revendications précédentes, **caractérisé en ce que** le dispositif de commande détermine la pression dans un circuit de freinage moyennant un capteur de pression et détermine la pression dans l'autre circuit de freinage via le courant de phase du moteur d'entraînement, et tient compte de la pression de circuit de freinage déterminée ou calculée pour la commande de l'augmentation de pression ou de la diminution de pression dans les freins de roue, en particulier pour le calcul de la course de piston (ds) nécessaire du piston (3) compte tenu de la (des) courbe(s) caractéristique(s) de pression-volume des freins de roue impliqués ainsi que du (des) temps d'ouverture t_{auf,n} ou t_{ab,n} nécessaires.

13. Système de freinage selon l'une des revendications précédentes, **caractérisé en ce que** le compartiment intérieur ou le compartiment d'ancrage (Ei) de la soupape d'entrée (EV) est relié à l'actionneur/au circuit de freinage (BK) afférent via une conduite hydraulique et la sortie de siège de soupape (Ea) est reliée au frein de roue (RB) afférent via une conduite hydraulique.

14. Système de freinage selon l'une des revendications précédentes, **caractérisé en ce que** le compartiment de travail (4a) de l'unité d'alimentation en pression (DE) est relié au réservoir de stockage de fluide à pression (10) via une liaison hydraulique (D), sachant qu'une soupape (PD1) commutable sert à arrêter la liaison hydraulique (VD) de telle manière qu'une diminution de pression dans au moins un frein de roue (RBi) puisse s'effectuer de manière temporellement commandée par ouverture de la soupape de commutation (SVi) afférente et par ouverture de la soupape (PD1), sachant que le temps d'ouverture (t_{ab,i}) déterminé au préalable détermine la pression de frein de roue à régler, en particulier une diminution ou une augmentation de pression commandée en volume dans au moins un frein de roue de l'autre circuit de freinage s'effectue via l'autre compartiment de pression (4) moyennant l'unité d'alimentation en pression (DE) lorsque les soupapes de commutation des freins de roue respectifs sont ouvertes simultanément.

15. Système de freinage selon l'une des revendications précédentes, **caractérisé en ce que**
- l'un compartiment de pression (4) de l'unité d'alimentation en pression (DE) est en liaison avec le compartiment de travail (A1) de la première unité de vérin à piston (HZE) via une liaison hydraulique (VL3), sachant que la liaison hydraulique (VL3) peut être arrêtée moyennant le déplacement du piston (SK) de la première unité de vérin à piston (HZE) à une position d'arrêt, laquelle est adoptée automatiquement par le piston en particulier en mode dégradé
et/ou
- le dispositif de commande tient compte de la position absolue du piston (3) lors de l'augmentation et/ou de la diminution de pression et détermine la course de déplacement (ds) nécessaire du piston (3) en fonction de la ou des pressions effectives, des pressions de consigne et de la courbe caractéristique de pression-volume des freins de roue respectivement impliqués dans l'augmentation ou la diminution de pression et/ou
- en fonctionnement normal avec de faibles exigences en termes de dynamique et une exigence élevée en termes de précision de réglage de pression, en particulier en cas de renforcement normal de la force de freinage, récupération, ABS en Low-µ, dans tous les freins de roue, la pression est augmentée et diminuée simultanément ou séquentiellement via la commande de course (ds) du piston (3) de l'unité d'alimentation en pression (DE) compte tenu des courbes caractéristiques de pression-volume respectives, et **en ce que**, dans des situations de fonctionnement avec des exigences élevées en termes de dynamique, en particulier en cas d'ABS en High-µ, µ-Spht, ESP et ASR, la pression, dans au moins un frein de roue, est diminuée simultanément via la soupape de sortie (AV1, AV3) associée et/ou via des soupapes de sortie (PD1) de l'unité d'alimentation en pression (DE).

16. Système de freinage selon l'une des revendications précédentes, **caractérisé en ce que**
- moyennant le dispositif d'actionnement (BP), en cas de panne du dispositif de génération de pression (DE) ou d'un autre cas d'erreur, en particulier en mode dégradé, l'au moins un piston (SK, HIKO) du premier dispositif de vérin à piston (HZE) peut être déplacé dans au moins un frein de roue pour l'augmentation de pression
et/ou
- la diminution de pression s'effectue via le déplacement commandé en course du piston (9) du dispositif d'alimentation en pression (DE) ou via la conduite de liaison d'une chambre de pression (DHK1, DHK2) du piston à double effet (8), lorsque la soupape (PD1, PD3) est ouverte, vers le réservoir de stockage (6), sachant que le dispositif de commande utilise la pression mesurée dans le circuit de freinage respectif ou la pression calculée pour la commande de diminution de pression
et/ou
- la diminution de pression, en cas de pressions élevées jusqu'à des pressions dans la plage proche de la pression de blocage en fonctionnement normal (200 bars -> env. 80-100 bars), s'effectue via la pression ou commande temporelle de la soupape PD3 avec une commande de course facultativement simultanée ou temporellement décalée du piston à double effet en mode d'avance et diminution consécutive de pression jusqu'à la pression atmosphérique via commande de pression-volume en mode de recul du piston à double effet.

17. Système de freinage selon l'une des revendications précédentes, **caractérisé en ce que** les vannes d'isolement (TV1, TV2, TV2b) sont conçues pour des débits élevés et des pressions différentielles faibles, en particulier l'unité de commande génère, moyennant l'unité d'alimentation en pression (DE), avant ou pendant l'ouverture d'une soupape d'isolement (TV1, TV2, TV2b), une pression dans le compartiment de pression (4, 4a) correspondant moyennant un déplacement du piston (3) qui est si grand qu'une pression différentielle suffisamment petite s'établisse au niveau de la soupape d'isolement (TV1, TV2, TV2b) à ouvrir.

18. Procédé servant à tester l'étanchéité et la mobilité du piston flottant (SK) d'un vérin de freinage principal (HZE) d'un système de freinage selon l'une des revendications précédentes, sachant que le vérin de freinage principal (HZE) présente, dans sa paroi de vérin, un canal (SL) à extension radiale qui débouche dans le premier compartiment de pression (DR1), sachant que l'embouchure du canal (SL) est obturée par le piston flottant (SK) dès que celui-ci est déplacé hors de sa position normale à raison du diamètre de l'embouchure, sachant que le canal (SL) est hydrauliquement en liaison avec un compartiment de pression (0) du dispositif d'alimentation en pression (DE), sachant qu'une butée mécanique (3) est disposée dans le vérin de freinage principal (HZE) et un ressort (4) exerce une force sur le piston flottant (SK) en direction de la butée (3), sachant que le piston flottant (SK) se trouve dans sa position normale lorsqu'il est situé contre la butée (3), **caractérisé en ce que** le procédé présente les étapes de procédé suivantes :
a. une pression est augmentée dans la chambre de pression (DR2, DR1) via l'unité de génération de pression (DE) et des soupapes sont commutées de telle manière que la pression dans la deuxième chambre de pression (DR2) soit plus grande que dans la première chambre de pression (DR1) de telle manière que le piston flottant (SK) se déplace et la conduite de liaison (SL) vers l'unité d'alimentation en pression (DE) se ferme, en particulier lorsque les soupapes (SV1, SV2) dans le circuit de freinage (BKI) sont ouvertes et les soupapes (SV3, SV4) dans le circuit de freinage (BKII) sont fermées ;
b. moyennant l'unité de génération de pression (DE), un profil de course de test du piston flottant (SK) et/ou une allure de pression-volume temporelle sont générés dans un des compartiments de pression du vérin de freinage principal (HZE) ;
c. à l'aide du signal d'un transmetteur de pression, l'allure de pression qui s'établit, en particulier la hausse de pression, est comparée avec l'allure de valeur de consigne, lorsque les soupapes (SV1-SV4) sont ouvertes, et évaluée.

19. Procédé servant à tester l'étanchéité et la mobilité du piston flottant (SK) d'un vérin de freinage principal (HZE) selon la revendication 18, **caractérisé en ce que** le procédé présente les étapes de procédé suivantes :
a) enregistrement de la pression dans le circuit de freinage (BKII) par fermeture des soupapes (SV3, SV4) pendant un stationnement (PSC) à l'arrêt du véhicule ;
b) réduction consécutive de la pression dans le circuit de freinage (BK I) moyennant l'unité d'alimentation en pression (DE) à 0 à 1 bar ;
c) blocage consécutif de l'unité d'alimentation en pression (DE) de telle manière que plus aucun mouvement de piston du piston (8) de l'unité d'alimentation en pression (DE) ne s'effectue, sachant que le dispositif de commande ferme la soupape d'isolement (TV2) ;
d) ensuite, les soupapes (SV3, SV4) s'ouvrent, suite à quoi le piston flottant (SK) se déplace en raison de la pression sur sa face arrière et augmente ainsi la pression dans le circuit de freinage (BK I) jusqu'à ce qu'un équilibre de pression s'établisse entre les deux circuits de freinage ;
e) mesure de la pression moyennant un capteur de pression dans un des circuits de freinage et évaluation de l'allure de pression.
